# EUROPEAN PATENT SPECIFICATION

(11) **EP 3 699 810 B1**
(45) Date of publication and mention of the grant of the patent: **28.04.2021**
(21) Application number: 19157941.6
(22) Date of filing: 19.02.2019
(51) Int. Cl.: G06K 9/00, G06T 7/00

(54) **CLASSIFICATION TECHNIQUE FOR ASSESSING A VISIBILITY DEGRADATION IN IMAGE DATA UNITS**
KLASSIFIZIERUNGSTECHNIK ZUR BEURTEILUNG EINER SICHTBARKEITSDEGRADATION IN BILDDATENEINHEITEN
TECHNIQUE DE CLASSIFICATION POUR ÉVALUER UNE DÉGRADATION DE VISIBILITÉ DANS DES UNITÉS DE DONNÉES D'IMAGE

(43) Date of publication of application: 26.08.2020
(73) Proprietor: Denso Corporation, Kariya-city, Aichi-Pref. 448-8661 (JP)
(72) Inventor: Hahmann, Ferdinand, 88131 Lindau (DE); Rehm, Johannes, 88131 Lindau (DE); Trujillo, Noel, 88131 Lindau (DE); Eslava-Medina, Francisco, 88131 Lindau (DE)
(74) Representative: Ernicke, Moritz

(56) References cited:
- US-A1- 2013 070 966
- GABB MICHAEL ET AL: "Probabilistic inference of visibility conditions by means of sensor fusion", 2014 IEEE INTELLIGENT VEHICLES SYMPOSIUM PROCEEDINGS, IEEE, 8 June 2014 (2014-06-08), pages 1211-1216, XP032620205, DOI: 10.1109/IVS.2014.6856409 [retrieved on 2014-07-15]
- PAVLIC MARIO ET AL: "Classification of images in fog and fog-free scenes for use in vehicles", 2013 IEEE INTELLIGENT VEHICLES SYMPOSIUM (IV), IEEE, 23 June 2013 (2013-06-23), pages 481-486, XP032501868, ISSN: 1931-0587, DOI: 10.1109/IVS.2013.6629514 [retrieved on 2013-10-10]
- MARTIN ROSER ET AL: "Classification of weather situations on single color images", INTELLIGENT VEHICLES SYMPOSIUM, 2008 IEEE, IEEE, PISCATAWAY, NJ, USA, 4 June 2008 (2008-06-04), pages 798-803, XP031318850, ISBN: 978-1-4244-2568-6
- AURELIEN CORD ET AL: "Towards rain detection through use of in-vehicle multipurpose cameras", INTELLIGENT VEHICLES SYMPOSIUM (IV), 2011 IEEE, IEEE, 5 June 2011 (2011-06-05), pages 833-838, XP031998994, DOI: 10.1109/IVS.2011.5940484 ISBN: 978-1-4577-0890-9

## Description

The present invention concerns the technical field of computer vision, in particular computer implemented techniques for assessing image information contained in image data units concerning the environment of a vehicle. The assessment of image information may in particular concern evaluation of image properties and/or classification of images. The present invention furthermore concerns the field of using artificial intelligence for emulating human decision behavior.

Artificial intelligence (AI) and its application is under permanent development and no general terminology has been established for this field. Therefore, some important terms will be explained based on a known AI algorithm and its application for lung cancer diagnosis.

It is known that artificial intelligence (AI) algorithms, which are included in a computer implemented AI-method or an AI software module, can be used for emulating decisions, which were previously taken by humans. This is explained based on a known example.

An AI-algorithm can be provided with a training data set comprising various example data units and associated parameters or classes. The AI-algorithm may analyze the example data units and establish filter rules, by which specific - but not expressly known - characteristics are found in the example data, which have a correlation to the parameters.

Such use of an AI algorithm is for example known for diagnosis of lung cancer. In that case, a training data set comprises x-ray images of human lungs, wherein some of the images concern lungs with cancer in various stages, and other images concern lungs of healthy patients. Further parameters associated to the images contain a computer-readable identification of the presence or non-presence of cancer, and eventually an identification of the stage of cancer.

It is further known that filter rules that have been established with such an AI algorithm based on such a training data set are able to emulate the decision behavior of human diagnosticians, who have labelled the images in the training data set with the cancer diagnosis parameters. With the filter rules it is even possible to provide correct cancer diagnosis at earlier stages of disease, where only slightly visible variations of the lung may have been unnoticed by some human diagnosticians. As a result, a computer implemented classification method for classifying cancer and its disease stage could be developed. This classification method that uses above mentioned filter rules created with an AI algorithm has been proven to be a valid emulator for human decision behavior in medicine. However, this approach can only be used for problems, where a human evaluator can provide the relevant classification parameters (here cancer diagnosis parameters) and associate them with the test images. As will be explained further below, human knowledge on the relevant classification parameters is, however, not always present.

It is further known in practice that vision sensors on vehicles, in particular automobiles / cars, and the image data they provide about the environment of the vehicle are an important basis for facilitating autonomous driving or highly automated driving. In particular, camera based advances driver assistance systems (ADAS) highly depend on the visibility level of the input image.

A further example is given in US2013070966 A1.

Vehicle control systems, in particular ADAS may - based on the processing of image data from the vision sensors - create an internal representation of real world objects and control vehicle functions like steering, acceleration, parking and so on.

When the image information contained in the image data provided form the vision sensor is subject to visibility degradation, i.e. when the gathered image is affected by imperfect sight conditions, misinterpretations may happen, which can lead to wrong control decisions and dangerous traffic situations.

Attempts have been made in the past, to classify various vision degrading influences and to establish evaluation schemes for assessing how strongly a vision degradation, which is based on a specific vision degrading influence, effects the image information comprised in image data from a vision sensor. However, such attempts were not able to provide an assessment scheme, which could cope with the immense variety of sight conditions that a vehicle and its vision system can be confronted with in the real world.

The present invention is made in view of above mentioned shortcomings.

It is an objective of the present invention to provide a classification technique for assessing visibility degradation in image information, which is contained in image data units. The classification technique shall be able to output a parameter, which describes the visibility or visibility degradation of image information independent of the vision degrading influence that caused it. This parameter shall in particular contain a single value, i.e. an overall assessment ranking for visibility degradation, which is independent from the kind or source of visibility degradation.

It is another, but related objective of the present invention, to provide a self-diagnosis technique for controlling the reliability or a vision sensor input.

The invention solves this objective by the various methods and devices as specified in the independent claims. Further advantageous variations of the invention are contained in the sub-claims.

The present disclosure suggests various methods and devices for automatically creating filter rules based on an artificial intelligence approach and provides a classification device (4) that can estimate a visibility degradation of newly gathered image data units (P*) by attributing a rank parameter (R*), thereby allowing to judge the reliability of vision sensor data.

The present disclosure comprises various aspects, which can be used singularly or in combination for making a contribution to the objective. Those aspects may form individually and/or in any possible combination a part of the disclosed classification technique. They are on an abstract level directed to following sub-objectives:
1. How to generate a ground truth, representing a decision rule for assessing the visibility level of input images, i.e. how to assess a visibility degradation of image data elements in such a form that it can be used by an AI algorithm.
2. Given such a solution for 1 is found, how to estimate the visibility degradation of newly gathered image data elements automatically, i.e. solely based on currently retrieved image information (and without any additional human evaluation), and in such a form that it can be processed by vehicle control systems.

The present disclosure provides technical solutions for above sub-objectives and thus an overall solution for the general objectives as mentioned above. Those technical solutions comprise several methods and devices, which are directed to several aspects.

A first aspect concerns a new approach for assessment of visibility degradation. A second aspect concerns an ordered data structure with a specific format, by which storing, sharing and further processing of the assessment result becomes possible. A third aspect concerns the creation of an emulator, which converts the assessment result into filter rules. A forth aspect concerns the use of such filter rules in a computer implemented classification method, which may - by executing the filter rules - perform an equivalent assessment for newly gathered image information. A fifth aspect concerns the testing of results from prior steps and their use for improvement of the various prior aspects. And a sixth aspect concerns a vehicle control device, which utilizes the classification of visibility degradation for more secure vehicle control actions.

The classification technique according to the present disclosure uses a computer executed AI-algorithm for emulating an assessment scheme. However, this assessment scheme is different to previous approaches and only indirectly based on human decisions for assessing a visibility or visibility degradation of image information.

Judgement of visibility degradation is very subjective. But for validation and training of an AI-algorithm a reliable and objective ground truth is required. The presently disclosed classification technology, in particular the assessment method, creates such an objective ground truth. And this ground truth may in particular be created in a form, which can be stored and read by a computer.

Within the present disclosure, it is always assumed that image information is contained in image data units. The image data units are gathered from a vision sensor, which is mounted on a vehicle, and they concern the environment of the vehicle, in particular when the vehicle is moving / driving under various sight conditions and in various environment / traffic situations. For simplification of the explanations, in some parts the image data unit may be used as a synonym for the contained image information. That means for example that a "visibility degradation of an image data unit" is to be understood as a "visibility degradation of image information that is contained in an image data unit".

An image data unit is a computer readable file or piece of data. It may have any arbitrary data type or data format which can store image information. An image data unit may in particular be a bitmap file or a data stream that is received from a vision sensor. The image data unit may comprise a full image that is taken by the vision sensor or any arbitrary image part. In particular, an image data unit may comprise only a section of the full image, which comprises a so called region of interest. From one full image that is taken by a vision sensor, one, two or several image data units may be created that are treated or processed. The presently disclosed classification technology can be used both for full images, parts or sections of images or a mix of both.

In the new assessment approach according to the present disclosure, image data units (or the contained image information) are presented to a human evaluator for providing his assessment of visibility or visibility degradation.

It was found that human evaluators are not capable of providing a single absolute evaluation parameter which describes the visibility degradation of image information (like explained above for cancer and its disease stages). The reason for this may be, that no general assessment scheme is known, which could be used as an overall matrix for measuring or evaluating a level of visibility degradation.

For example, if a first image is influenced by glare, wherein another image is influenced by droplets (e.g. from rain) or contamination (e.g. dirt on lens), human evaluators seem to be unable to give an absolute assessment on the question, how strongly the visibility of such images is degraded. Human evaluators often try to separate those cases and to provide a first assessment value only within a first group of images, which are affected by a first vision degrading effect (e.g. droplets / rain), and to provide a separate second assessment value within another group of images, which are affected by a different vision degrading effect (e.g. contamination). As a result, it is not possible to receive from human evaluators an absolute parameter for describing the visibility degradation on a single scale, i.e. independent from the specific vision degrading influence.

However, for operating a vehicle control device based on image data, it would be strongly desired to have such a single absolute evaluation parameter.

According to the present disclosure, a new approach was chosen for assessing visibility degradation. The assessment approach includes two steps: (1) (Human) assessment of visibility degradation based on relative comparison of a restricted number of image data units, and (2) (computational) transformation of the comparison results into an absolute visibility rank order by applying mathematical operations.

Step 1 makes use of the (only) subjective evaluation competence of a human evaluator. Step 2 transforms the subjective relative assessment results into an absolute scale, which can be used as a ground truth for an AI-algorithm.

The result of this two-step assessment approach is that the image data units can now be associated with an absolute rank parameter, which describes on a scale between a minimum value and a maximum value, how strongly the image information contained in a respective image data unit is affected by visibility degrading influences. For example, an image data unit with the strongest visibility degradation (i.e. almost nothing is visible) may receive the lowest rank parameter, whereas an image data unit, which was gathered under perfect sight conditions, may receive the highest rank parameter. All other image data units, which are more or less affected by sight impairments, will receive intermediate ranks.

In the absolute visibility rank order, a higher rank parameter may be interpreted as "containing less visibility degradation".

The previous example is based on the assumption that a higher rank implicates better visibility or respectively less visibility degradation. The skilled person will realize that the scale could also be inverted, such that a higher rank parameter might be interpreted as "containing more visibility degradation". For the sake of simplified understanding, the following explanations are based on the assumption that a higher rank means better visibility.

The great advantage of the presently disclosed two-step assessment approach is that it is not required and especially not intended to make any difference between the various vision degrading influences that may occur and affect image information that is retrieved from a vision sensor. Instead, under whatever conditions the image data unit was gathered, the human evaluator is only required to make a relative comparison decision (better / worse / equally visible). The comparisons will be transformed by computation into absolute rank parameters for the image data units and the computed absolute rank parameter will describe on a single scale, how strongly the visibility is degraded. Based on the rank parameter, the image data units can be sorted in the absolute visibility rank order from least visible to best visible or respectively from containing strong visibility degradation to containing no visibility degradation.

Then, the image data units and the associated rank parameters are included in a training data set for an AI algorithm. The AI algorithm can analyze the image information contained in the image data units and establish filter rules. The filter rules identify structures in the image data units that can be attributed to the absolute visibility rank parameter. The filter rules thus emulate a decision scheme based on the training data set, which was impossible for the human evaluator.

The filter rules can be used for creating or configuring a computerized visibility degradation classification device. In other words, based on the filter rules, a computer implemented classification method can be performed, which is able to retrieve new image data units and to apply the emulated decision scheme to them. The result is an emulated rank parameter. This emulated rank parameter describes where a newly received image data unit could be sorted-in in the absolute visibility rank order as comprised in the training data set. The classification method thus provides quantitative evaluation on the visibility degradation, by which the image information in the new image data unit is affected.

Based on such an emulated rank parameter, a vehicle control device may judge, how well it might trust the image information for further processing.

Now the various aspects of the present disclosure will be explained in more detail.

The first aspect comprises a computer implemented assessment method for creating a training data set. The training data set may be intended and designed to serve as an input for an AI-method or an AI software module for creating an emulator (filter rules 16) or for configuring a computer implemented classification method.

The assessment method comprises following steps. A main set of image data units is gathered. The image data units concern the environment of a vehicle. At least a share of the image data units contains image information which is subject to a visibility degradation based on at least one vision degrading influence. This terminology covers the case, that some of the image data units are affected by visibility degradation, whereas other image data units are not. But it may also covers the case that only a part or sub-area of an image data unit is affected by visibility degradation, whereas other parts or sub-areas of the same image data unit are free from visibility degradation. The training data set may thus comprise a mix of at least two among
- image data units without any visibility degradation,
- image data units with a visibility degradation affecting only a part of this image data unit,
- image data units with a visibility degradation that affects all contained image information.

Multiple subsets of image data units are defined and comparison results for a relative comparison of the image data units in a respective subset are gathered. A gathered comparison result is associated to the respective subset and it indicates a relative order of the visibility or visibility degradation among the image data units within this subset.

Multiple subsets and the respective comparison results are processed. In the processing, a transformation of the relative comparison results into an absolute order is performed. This can be done by any suitable procedure or scheme. Further below, a specifically well suited calculation scheme - called Elo sorting - will be explained. Based on the processing or transformation, an absolute visibility rank order is established for the image data units in the processed subsets.

A rank parameter is associated to an image data unit. This can be done as a step within the processing / transformation. The rank parameter is calculated based on multiple comparison results of the processed subsets. The rank parameter defines a rank within the absolute visibility rank order.

Establishing the absolute rank order and calculation of rank parameters can be done in parallel, in overlapping steps / iterations, or one after the other. A rank that is newly calculated for an image data unit may cause a change in the absolute rank order and vice versa. The absolute rank order can be the set or group of rank parameters that have been calculated at a specific time. Alternatively, the absolute rank order can be a separate information part, in particular a separately storable dataset.

A training data set is outputted, which comprises the image data units of the processed subsets and the associated rank parameters.

According to the second aspect, the training data set may be a computer readable file or data structure. It may be stored on a physical data carrier or it may be transmitted through a data communication interface. The training data set comprises multiple image data units and multiple rank parameters.

To at least a share of the image data units in the training data set a respective rank parameter is associated. Each rank parameter defines a rank of the associated image data unit within an absolute visibility rank order.

According to the third aspect, a computer implemented emulator creation method is suggested. It comprises the following steps.

A training data set is fed as an input to a computer implemented AI-method or an AI software module. The training data set contains image data units and associated rank parameters. It is preferentially created by a computer implemented assessment method as explained above and/or it may have above explained form and contents.

The training data set is defined as the ground truth for the AI-method or the AI software module. This means that the AI-method or AI software module is provided with image information contained in various image data units and with associated rank parameters as classifiers. The AI-method or AI software module shall learn by itself, based on which structures in the contained image information, a decision can be made which results in the associated rank parameters. The AI-method or AI software module will find out by itself, which structures are available and it will create attributions from such structures to the rank parameters by itself.

The AI-method or the AI software module is thus configured to analyze the image information contained in the image data units and to establish (internal) filter rules. The filter rules provide an attribution from the image information to the associated rank parameter of the respective image data unit. The filter rules thus emulate an evaluation of the visibility degradation of image information contained in the image data units in accordance with the ground truth (or respectively indirectly in accordance with the absolute visibility rank order).

The filter rules in fact are an emulator for a decision behavior which is defined by the content of the ground truth. A method that uses an AI-method or and AI-software module for creating such filter rules is thus a method for creating an emulator.

The filter rules can be stored and/or transmitted. Likewise, the AI software module can be stored or transmitted. Furthermore, a classification software module can be created or configured with the filter rules. And a computerized classification device can also be configured based on the filter rules.

In a preferred embodiment, the AI-method or AI software module may comprise filter rules including a so called convolutional neuronal network. Alternatively, any other suitable AI-method or AI software module may be utilized.

According to the forth aspect, a computer implemented classification method (CM) is suggested. It comprises filter rules that are designed to attribute an estimated rank parameter based on image information contained in an image data unit. The filter rules of the classification method may be the same filter rules that are created by a computer implemented emulator creation method (EM) as explained above. Alternatively, the classification method may contain its own (classification) filter rules, which may however be configured based on the filter rules that are created by a computer implemented emulator creation method (EM) as explained above. In any case, the filter rules used within the classification method may be called "classification filter rules" for clarification purposes.

The classification method comprises the following steps. An image data unit concerning the environment of a vehicle is gathered. Image information that is contained in the image data unit may be subject to a visibility degradation based on at least one vision degrading influence. The (classification) filter rules are applied to the image data unit. An estimated rank parameter, which is attributed to the image data unit (P*) by the filter rules, is given as output. The estimated rank parameter indicates a rank within an absolute visibility rank order between a minimum value and a maximum value, so that the estimated rank is representative for a degree of the visibility degradation.

According to the fifth aspect, a computer implemented testing method for evaluating or improving a training data set is suggested. This method will be explained further below by taking reference to the drawings.

According to the sixth aspect, a vehicle control device is suggested, which is also explained further below by taking reference to the drawings.

With above explanations it can be understood, how an absolute visibility rank order can be established based on a retrospective approach and human evaluation. The result of such assessment can be stored as an ordered data structure, i.e. in a computer readable form, which is the training data set. The training data set can be stored on a physical data carrier, e.g. in the memory of a computer, on a CD/DVD, USB stick and so on. It can also be transmitted through a data communication interface, e.g. through an internet connection, a network socket and so on. The training data set is designed for storing the assessment result in such a form that it can be used further by a computer implemented AI-algorithm.

The invention is depicted in the drawings in an exemplary and schematic way. They show:
- Figure 1:: A schematic depiction of a vehicle with a vision sensor, its environment and several image data units;
- Figure 2:: a box diagram illustrating the use of a computerized classification device according to the present disclosure;
- Figure 3:: a schematic diagram illustrating a first part of the assessment method according to the present disclosure;
- Figure 4:: a schematic diagram illustrating a second part of the assessment method;
- Figure 5:: a schematic diagram illustrating an emulator creation method according to the present disclosure;
- Figure 6:: an overview chart illustrating how the various methods and devices of the present disclosure can be temporally and/or spatially distributed or how they may interoperate;
- Figure 7:: a schematic diagram illustrating a testing method according to the present disclosure;
- Figure 8:: a schematic diagram illustrating optional improvement steps within the assessment method.

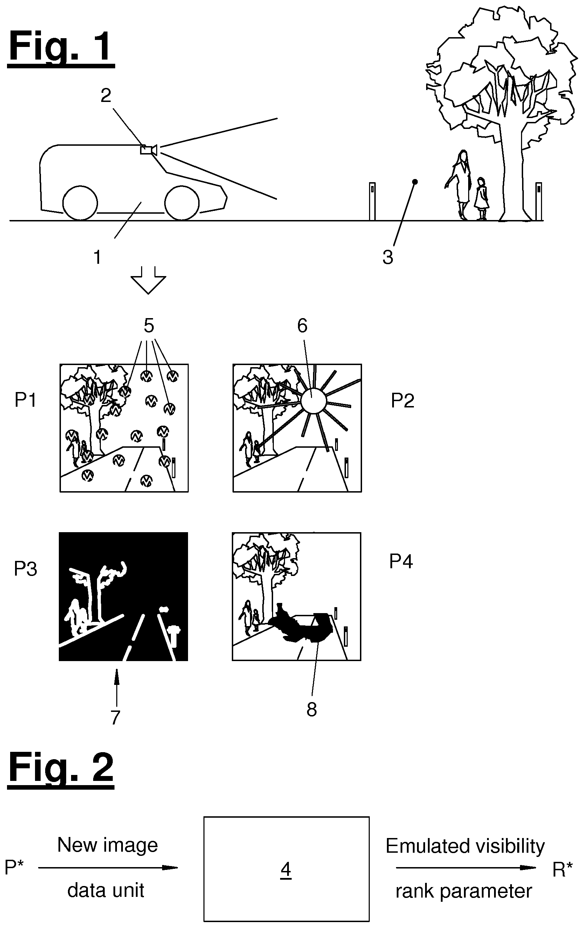

Figure 1 shows a vehicle (1), which is equipped with a vision sensor (2). The vehicle (1) may be an automobile, a passenger car, a truck, or any other kind of vehicle, in particular a land vehicle. Here the vehicle (1) is assumed to be a test vehicle, which is equipped with a test vision sensor (2). The test vehicle may be used for gathering image data units (Pi) for the assessment method (AM) according to the present disclosure. A test vehicle (1) may be used for the first or subsequent gathering of image data units, which will become a part of the training data set. A test vehicle may further be used for verifying the quality of a fully or partially trained AI software module and/or a computerized classification device (4). An ego vehicle (1'), which is named further below, may be a real car which is sold by a car manufacturer and owned or used by any third party. The differentiation between test vehicle (1) and ego vehicle (1') is made exclusively for explaining the development process and the later use of the AI technology according to the present disclosure. The differentiation is however not decisive for the technical functionality of the methods or devices as included in the present disclosure.

The vision sensor (2) may be of any arbitrary kind. It may for example be a CMOS camera or any other suitable type of electronic camera. It may output single image files and/or an image data stream. The image information gathered by the vision sensor (2) may contain grey scale information or color information or both. The vision sensor (2) may comprise further optical equipment, in particular one or more lenses and/or optical filters.

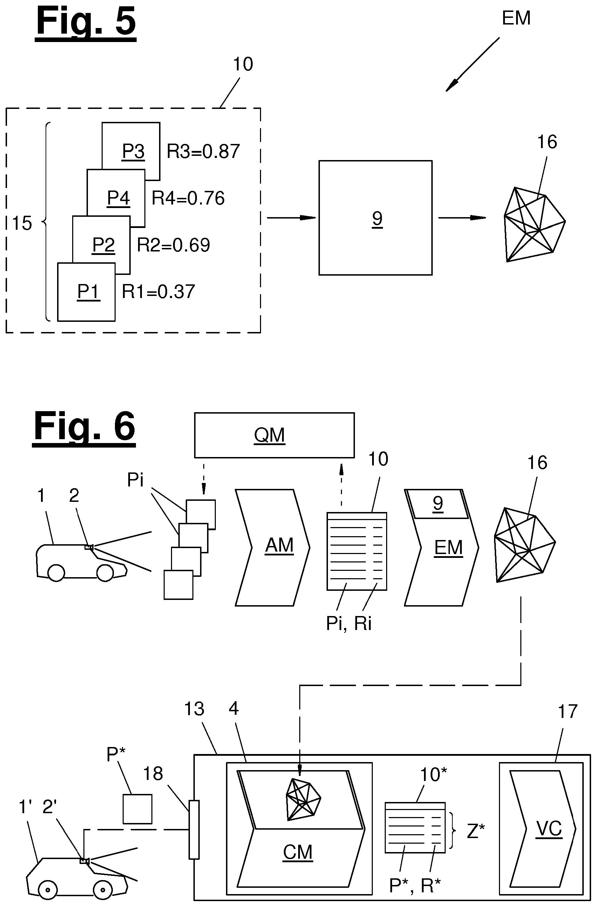

Preferentially, a mounting position and/or orientation of the vision sensor (2) is known. Although it is not strictly required for the presently disclosed technique, it may be beneficial that the vison sensor (2) of the test vehicle (1), its mounting position and/or orientation, are the same or very similar to a vision sensor (2') that is used for gathering new image data units (P*) for a classification method (CM) according to the present disclosure. Likewise, conformity among the mounting position and/or orientation of the test vision sensors (2) on the test vehicle (1) and an application domain vision sensor (2') on a privately used vehicle (1') is preferred (compare Figure 6).

The following explanations may apply to the test vehicle sensor (2) and likewise to the application domain vision sensor (2'). So, no further differentiation between those vision sensors (2, 2') or vehicles (1, 1') is made.

The vision sensor (2) is preferentially directed to the environment (3) of the vehicle (1, 1'). It may in particular be directed to the environment (3) in front of the vehicle (1, 1') or behind the vehicle (1, 1'). Alternatively, any other orientation of the vision sensor (2, 2') is possible. For example, the vision sensor could be a side camera. It may be devised in any structural form, for example as a pinhole camera, a 180° fish eye camera and so on.

In the example of Figure 1, various visible elements or structures may be part of the environment (3), about which image information is gathered by the vision sensor (2), in particular road side objects, road-bound objects, obstacles and traffic participants. The present technology is independent from the type, size or number of visible elements or structures, which could be contained in the image information of an image data unit (Pi) .

For illustration purposes, figure 1 shows four image data units or the respective image information contained therein, which are affected by different vision degrading influences. The depicted image data units concern the same scene / traffic situation. However, this is chosen only for simplification. In reality, the image data units may be taken from the same and/or from differing traffic situations.

The image data unit (P1) is affected by droplets (5), which may cover some parts of the visible area and partially or completely hide real-world elements or structures in the environment (3), which would otherwise be visible.

The image data unit (P2) is affected by glare (6). The image data unit (P3) is affected by darkness (7) and the image data unit (P4) is Affected by contamination, i.e. dirt or any other undesired material within the visible area. Although not depicted, one or several image data units may be present, which are not affected by any form of vision degradation, i.e. clean images, or image data units gathered under perfect sight conditions.

Figure 2 illustrates one of the important advantages that is achieved by the classification technic according to the present invention. A computerized classification device (4) (including the filter rules (16) and thus preferentially a trained neuronal network) is supplied with a new image data unit (P*). The computerized classification device (4) applies the filter rules (16) to the new image data unit (P*), and then outputs an attributed emulated visibility rank parameter (R*).

The emulated visibility rank parameter (R*) can be stored, associated with the new image data unit (P*) and/or transmitted to another computerized device for further processing. Such further computerized device may in particular be a vehicle control device of an ADAS (advanced driving assistance system) or of an autonomously driving vehicle.

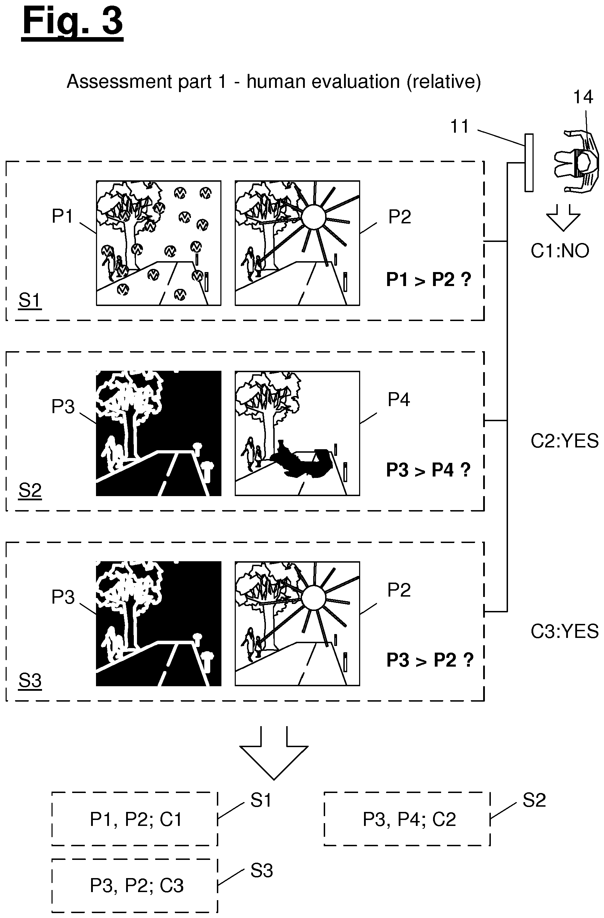

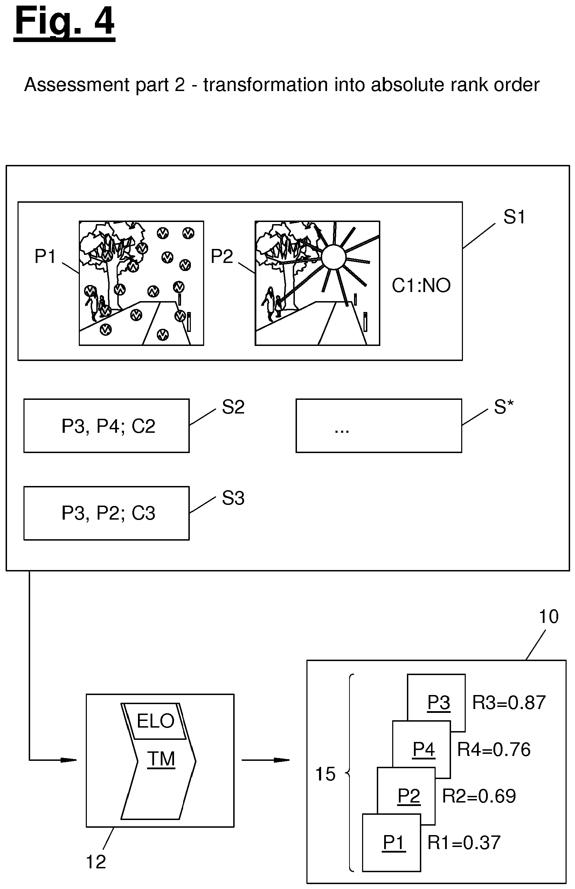

By taking reference to Figures 3 and 4, now the computer implemented assessment method according to the present disclosure will be explained in more detail.

A main set (M) of image data units (PI, P2, P3, P4) is gathered. The image data units may be retrieved directly from a vision sensor (2), which is mounted on a vehicle (1), as explained above with reference to Figure 1. Alternatively, or additionally some or all of the image data units may be taken from a stock, in particular out of a data base. The stock or data base may however contain image data units, which have been gathered by a vision sensor (2, 2') mounted on a vehicle (1, 1').

As illustrated in Figure 3, multiple subsets (S1, S2, S3) are defined, each subset (S1, S2, S3) comprising a tuple of image data units (Pi), in particular a pair of image data units.

It is preferred that all subsets (Si) contain the same number of image data units, in particular two none-identical image data units. However, the assessment method is also executable for subsets (S1, S2, S3) which contain different numbers of image data units.

In the first execution of the assessment method (AM), one or several subsets (S1, S2, S3) may be created. At any time during execution of the assessment method (AM), a specific number of subsets (S1, S2, S3) may already exist and at least one new subset (S*) may be created. In other words: The number of subsets (S1, S2, S3) may grow. Likewise, the number of subsets might be reduced. Reduction of the number of subsets could for example be advisable in a case, where a part of the subsets does not contribute to further training success of the AI method. In that case, it might be advisable to keep only such subsets, which provide for a training gain. The removal of non-helpful subsets may reduce the required computational effort.

The image data units (PI, P2; P3, P4; P3, P2) to be included in a subset (S1, S2, S3, S*) may be chosen arbitrarily and/or based on selection rules. The selection rules may be defined in any arbitrary way. Some examples will be given further below.

In a preferred embodiment, the subsets (S1, S2, S3) are generated in such a way, that duplicate subsets are avoided. With other words, a tuple of a first specific image data unit and one or more further image data units shall occur only once within the entirety of subsets. With other words, a newly created subset (S*) should be different from all previously existing subsets (S1, S2, S3). In another embodiment, duplicate subsets may be allowed or even generated intentionally. This may in particular be done, for confronting different evaluators (14) with difficult cases. By storing and processing the (potentially differing) comparison results for different evaluators, the tendency of the trained filter rules to output "wrong" or "non-comprehensible" emulated rank parameters based on single "wrong" inputs may be reduced.

On the other hand, it is suggested that at least a majority of the available image data units (PI, P2, P3, P4) of the main set (M) are included in at least two and preferentially three, four or more subsets (S1, S2, S3). Positive results have been recorded for training data sets, in which a majority or each of the image data units is included in 30-70 subsets, in particular in about 50 subsets.

In the assessment method (AM), comparison results (C1, C2, C3) are gathered for a relative comparison of the image data units (P1/P2, P3/P4, P3/P2) in a respective subset (S1, S2, S3). The gathering of comparison results (C1, C2, C3) may be performed in any arbitrary way. Preferentially, the image data units (Pi) contained in a subset are presented on a display (11) to a (human) evaluator (14). This may be done in an iterative process. The "labeler" may be a single person, i.e. always the same person, or preferentially a group of persons.

For each iteration, at least one subset (S1, S2, S3) may be selected and the included image data units (PI, P2, P3, P4) may be displayed, in particular on a screen which is monitored by the evaluator (14). If two or more subsets are selected, the included image data units are preferentially displayed with temporal and/or spatial separation or grouping.

The corresponding comparison result(s) (C1, C2, C3) may be gathered in any arbitrary way. Preferentially, an input parameter is gathered that identifies the comparison result (C1, C2, C3) for the respective subset (S1, S2, S3). The input parameter may be a direct input which is made by the evaluator (14). Alternatively, the input parameter may be derived indirectly from another input.

In the example of Figure 3, a prompt is displayed in addition to the image data units (PI, P2). The prompt may contain a question on the comparison result, like for example "P1>P2?". The input parameter may be a response to this prompt. In the example of Figure 3, the evaluator (14) may input responses with the values (C1:NO, C2:YES, C3:YES). As will be explained further below, an input response may also indicate that an equal degree of visibility degradation is present for the compared images.

Alternatively, the evaluator (14) may be required to sort the displayed image data units (PI, P2) according to the level of contained visibility degradation, for example starting from low visibility degradation towards the strongest visibility degradation or vice versa.

According a preferred embodiment, each subset (Si) may contain only a restricted number of image data units, which restricted number is much smaller than the overall number of image data units contained in the main set (M).

In a particularly preferred embodiment, each subset (S1, S2, S3) comprises a pair of image data units, which are displayed. The comparison result may then identify, which of the comprised image data units is affected more (or less) by visibility degradation.

The relative comparison result may be gathered or formulated in any arbitrary way. However, it should indicate in a computer readable form a relative order of the visibility (or visibility degradation) among the displayed image data units in the subset.

It may be required, that one image data unit is selected as the one with the most or least visibility degradation.

In case of pair-wise comparison, this would correspond to a comparison result with the meaning "the first image data unit has higher visibility degradation than the second image data unit" or "the first image data unit has less visibility degradation than the second image data unit". Alternatively, also co-ordination of image data units may be allowed, i.e. "the first image data unit is equally affected by visibility degradation as the second image data unit".

The comparison result is associated to the respective subset (S1, S2, S3) that was displayed. Preferentially, the subsets (S1, S2, S3) may be stored as tuples containing the respective image data units (Pi) and the comparison results (Ci).

Figure 4 illustrates a second part of the computer implemented assessment method (AM) according the present disclosure. Here, a transformation of the subsets (Si) or respectively the image data units (Pi) with the associated comparison results (Ci) into an absolute visibility rank order (15) is illustrated. Also this transformation may be done in an iterative process, in particular with repetition of one or several of the steps which are described below. Therefore, it will not be differentiated between single execution of a step or repeated execution of a step in the explanation.

Multiple subsets (S1, S2, S3) and the respective comparison results (C1, C2, C3) are processed. The absolute visibility rank order (15) is established for the image data units (P1, P2, P3, P4) in the processed subsets (S1, S2, S3). The processing may be performed for all presently available subsets (S1, S2, S3). Alternatively, it may only be performed for some of the subsets. Again alternatively or additionally, new subsets (S*) may be added and processed in a further iteration.

The transformation may be performed by using any suitable transformation method (TM). For example, for all subsets and all the image data units, it may be counted, how often each processed image data unit has been named in a comparison result as the one with the lower visibility degradation. Instead of counting all subsets and all processed image data units, it may be sufficient to perform the counting only for a majority of the subsets and/or a majority of the image data units, or respectively for a number of subsets and image data units, which is considered sufficient.

Alternatively or additionally to counting low visibility degradation, it may be counted, how often a respective image data unit has been named as the one with the higher or highest visibility degradation in the respective subset (comparison major) or respectively the one with the lower or lowest visibility degradation in the respective subset (comparison minor).

Based on this counting or the respective comparison-major ranking frequency or comparison-minor ranking frequency, the processed image data units may be sorted.

When two image data units have received the same counts / ranking frequency, in an optional step, a new subset (S*) may be created containing at least one of those equally ranked image data units and a new comparison result may be gathered. This may be repeated as long as is required for achieving a sufficiently precise absolute ranking.

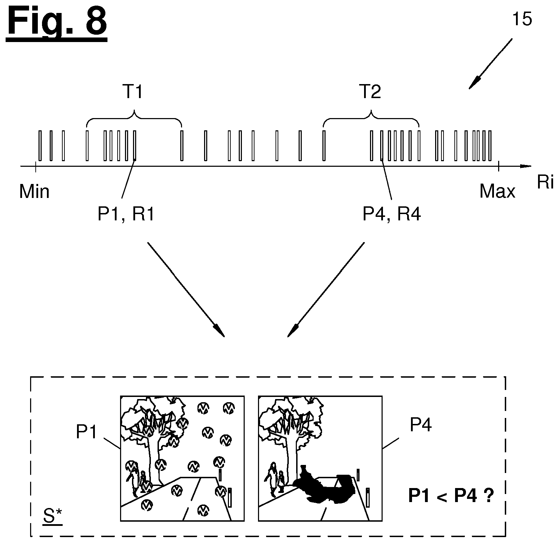

Already after some iterations, the image data units will be sorted on the absolute visibility rank order (15) between a minimum visibility (strongest affection by visibility degradation, Min) and a maximum visibility (lowest affection by visibility degradation, Max). Such a sorted order is exemplarily depicted in figure 8.

A rank parameter (Ri / R1, R2, R3, R4) is associated to an image data unit (Pi / P1, P2, P3, P4). The rank parameter is calculated based on multiple comparison results (C1, C2, C3) of the processed subsets (S1, S2, S3) .

The rank parameter may have any arbitrary format. It is stored in a computer readable form.

In the aforementioned example of sorting the image data units based on counts, the rank parameter (Ri) may be a position number between the position (rank 0) of the image data unit (Pi) in figure 8, which has the least visibility (Min), and the position number of the image data unit (Pi) at the opposite end (Max) of the absolute visibility rank order (15). Alternatively, any other suitable calculation of format of the rank parameter (Ri) may be used.

The rank parameter (R1, R2, R3) should however define a rank of the respective image data unit (Pi) within the absolute visibility rank order (15).

In one embodiment, the rank parameter may be required to be a unitary value, i.e. it may be forced that each rank parameter (Ri) is associated at maximum to one image data unit (Pi). In this case, co-ordination of image data units (Pi) within the absolute visibility rank order (15) is avoided (depicted in Figure 8). Alternatively, co-ordination of image data unit (Pi) may be allowed, i.e. that two or more image data units might be associated with the same rank.

As an end result or as an interim result, the computer implemented assessment method (AM) may output a training data set (10), comprising the image data units (PI, P2, P3) of the processed subsets (S1, S2, S3) and the associated rank parameters (R1, R2, R3).

As it has been explained above, the various steps of the assessment method (AM) may be performed iteratively. This means that every described step may be performed only once or multiple times. Preferentially, the definition of subsets (S1, S2, S3) and their processing, and/or the calculation of rank parameters (R1, R2, R3) are performed until a predefined rank order evaluation criterion is fulfilled.

The rank order evaluation criterion may be defined arbitrarily, in particular based on the AI-algorithm that is intended for use in the emulator creation method (EM). The criterion may for example define a minimum number of ranks (number of associated values or range of the rank parameters), a minimum and/or maximum homogeneity of ranks within the absolute visibility rank order (15) or specific desired ranges for distribution parameters like e.g. average difference among specified ranks (Ri) and so on. Alternatively or additionally, a number of (already performed) comparisons per image may be calculated and analyzed as a rank order evaluation criterion.

Figure 6 illustrates in the upper half how a qualification method (QM) may be applied for analyzing an intermediate result or end result of the assessment method (AM). In particular, for each iteration step, the rank order evaluation criterion maybe monitored and performance of a next iteration may be planned correspondingly.

Further iterations of the method steps contained in the assessment method (AM) may by triggered based on a deviation of the momentary qualification result from a qualification threshold, in particular a deviation from the rank order evaluation criterion as mentioned above.

The definition of subsets (S1, S2, S3) in the assessment method (AM) may comprise following steps:
A subset count parameter is calculated, which indicates in how many already existing subsets (S1, S2, S3) an image data unit (P1, P2, P3, P4) of the main set (M) is included. If the subset count parameter of an image data unit (Pi) is below a predefined count threshold, a new subset (S*) is defined with the selected image data unit (Pi) and at least on further image data unit (Pi) from the main set (M). This new subset is then further processed in the assessment method (AM).

Alternatively or additionally, the definition of subsets (S1, S2, S3) may comprise the following steps, which are performed at least once:
The already calculated rank parameters (Ri) of multiple image data units (Pi) in the main set (M) are analyzed. This may in particular be done with calculating a distribution qualification parameter as explained above. A first target range (T1) and at least one further target range (T2) are identified within the absolute rank order (15) (compare figure 8). This identification may in particular be based on a desired rank distribution.

In the example of figure 8 the target ranges (T1, T2) cover sections of the absolute visibility rank order (15), which show increased inhomogeneity of the contained rank parameters (Ri) when compared to neighboring ranges. Such a local inhomogeneity may be one criterion for choosing a first or a further target range (T1, T2). Alternatively, any arbitrary different criterion may be used for identification of a first target range and at least a further target range.

A target range may comprise one, two, three or more already existing rank parameters (Ri) and the associated image data units (Pi).

In the example of Figure 8, a first image data unit (PI), whose rank parameter (R1) is located in the first target range (T1) is selected and at least one further image data unit (P4), whose rank parameter (R4) is located in the further target range (T2) is selected. A new subset (S*) containing the selected image data units (P1, P4) is defined and this new subset (S*) is processed.

Another suitable approach for the definition of subsets (S1, S2, S3) may comprise the following steps:
A first image data unit (P1) is selected, for example based on the number or already performed comparisons for this image data unit (P1) and/or its current rank parameter (R1). Then, at least one target range (T1, T2) may be defined based on the selected image data unit (P1) ant its rank parameter (R1). From this target range(s) (T1, T2) another image data unit (P4) may be selected, wherein the selection of this other image data unit (P4) may be based on random-based or probability-based picking within the target-range(s) (T1, T2). The random-based or probability based picking may analyze a deviation of the current rank parameters (R1, R4) of the image data units (PI, P4). This deviation should be smaller than a first deviation threshold and/or larger than a second deviation threshold. In particular, the absolute deviation of the rank parameters |R1-R2| may be calculated and compared to the at least one deviation threshold.

It has been explained above, that any arbitrary transformation method may be used for creating subsets and for establishing the absolute visibility rank order (15) and/or for calculating the rank parameters (Ri).

A particularly good result has been achieved by using an elo rating method (ELO) for the calculation of a rank parameter (Ri). Elo rating methods is generally known from chess tournaments. It may also be called elo rating system.

An elo rating system for chess-games comprises a method for calculating a so called skill level for chess-players. The skill level or elo rating number increases or decreases depending on the outcome of chess games between rated players. After every game, the winning player takes points from the losing one. The difference between the ratings of the winner and the loser (before the game) correlates with the total number of points gained or lost after a game. If the winner has a much larger rating before the game, than his rating increases only slightly (and the loser rating only decreases slightly). If, however, the loser has a much larger rating before the game, then this rating decreases a lot (and the winner rating increases a lot). Therefore, the difference between the ratings before the game has an influence on the points gained or lost by the game, but the points gained or lost also depend on the outcome of the game.

A similar calculation approach can be applied to the absolute rank parameters (Ri), which are associated to the image data units (Pi). A comparison result (C1, C2, C3) can be considered as a result of a chess game. The image data unit, which is evaluated to be effected less by visibility degradation, can be considered as the winner of this subset. The other contained image data unit (in case of pairs) or the other image data units (in case of larger tuples) can be considered as losers. Various calculation rules can be found in prior art for implementing an elo rating method.

A rank parameter (Ri), which is calculated based on an elo rating method may be an integer number or a float number. The possible range of rank parameters may increase with every new subset or comparison result that is processed.

It is considered beneficial to transform the initially calculated number into a pre-defined range, in particular a range between a minimum possible rank parameter (Min) of zero (Min = 0) and a maximum possible rank parameter (Max) equal to one (Max = 1). As a result, a rank parameter (Ri) that is calculated based on an elo rating method, may be a float number between 0 (zero) and 1 (one). Another option is to define two thresholds e.g. (B1) and (B2) and to set every value lower or equal B1 to zero and every value larger of equal B2 to one and all values between B1 and B2 to a scaled value e.g. with (Ri - B1)/(B2-B1). The scaled value may be derived by linear scaling or non-linear scaling.

Figure 5 illustrates a computer implemented emulator creation method (EM) according to the present disclosure. The emulator creation method (EM) makes use of an artificial intelligence method, or an artificial intelligence software product (9) or respectively of an included (AI-algorithm). Such AI methods and AI software products are basically known.

A training data set (10), as explained above, is provided as an input to the computer implemented artificial intelligence method or artificial intelligence software module (9). The training data set (10) contains image data units (Pi) and associated rank parameters (Ri) in a computer readable form, in particular stored on a data carrier (see above).

The training data set (10) is defined as the ground truth for the artificial intelligence method or the artificial intelligence software module (9). The AI method or AI software product is configured (and used) to analyze the image information contained in the image data units (Pi) and to establish (internal) filter rules (16). The filter rules (16) may have any arbitrary definition, which may depend on the kind of artificial intelligence method or artificial intelligence software module (9) that is used.

The filter rules (16) provide an attribution from the image information, which is contained in the image data unit (Pi), to the associated rank parameter (Ri) of the respective image data unit (Pi), such that the filter rules (16) emulate an evaluation of the visibility degradation of image information contained in the image data units (Pi) in accordance with the ground truth.

In a preferred embodiment, the artificial intelligence method or the artificial intelligence software module (9) comprises (internal) filter rules (16) including a convolutional neuronal network. The filter rules (16) may thus comprise a structure of the neuronal network, the weights between the neurons and/or input thresholds of the neurons (further-on called biases). The kind and number of neurons and their connections may define the structure of the neuronal network. The neurons and connections are preferentially grouped in layers. The structure may include responsive neurons (normal neurons), i.e. neurons connected to a previous layer, which are activated when the input signal exceeds the input-threshold, and optionally bias-neurons (always active neurons, not connected to a previous layer).

During training of the AI software module (9) or convolution neuronal network (CNN), the weights and/or biases are iteratively changed in such a way, that the neuronal network - when confronted with the training data set (image data units Ri) - will provide an output (estimated rank parameter (R*)), which coincides with the ground truth. In fact, a trained neuronal network or AI software module should be able to emulate the decision behavior as it is defined in the training data set based on the image data units (Pi) and the associated rank parameters (Ri). For the iterative changes to the weights and biases, a cost-reducing algorithm may be performed, which uses a gradient scheme. A weight or bias is changed in each iteration in such a way, that the deviation of the present output to the ground truth is minimized.

Although present AI technology uses a fixed structure of a neuronal network, which is usually pre-defined, it is also possible that the structure of the neuronal network is changed or extended during the training. Also such changes or extensions to the structure of the neuronal network could be performed based on a cost-reducing algorithm, as it is the case in human neuronal networks, where new neurons can be created and added to the already trained network, without changing or deteriorating the functionality of the present network.

The filter rules (16) work as an emulator for a (virtual) decision rule, such that the filter rules will automatically estimate a visibility degradation rank parameter from a given image data unit, so that the output (emulated rank parameter) corresponds to the ground truth rank parameter (Ri) for that image in the training data set (10).

The filter rules (16) can be stored, e.g. in the form of a structure definition for a neuronal network and values for the weights and biases, which resulted from the training process. The filter rules may alternatively or additionally be transmitted. Likewise, the artificial intelligence software module (9) as such (software part comprising the filter rules and execution means) or defining parameters of the artificial intelligence method (replication information for re-creating an AI software module with filter rules and execution means) may be stored or transmitted.

In particular, a classification software module may be configured based on the filter rules (16) or a computerized classification device (4) may be configured based on the filter rules (16). This is exemplarily depicted in figure 6, where the filter rules (16) (emulator), which are created with the computer implemented emulator creation method (EM), are transferred to a computerized classification device (4).

The computerized classification device (4) comprises a classification section, which is designed to execute a computer implemented classification method (CM) according to the present disclosure. It is furthermore adapted to output an estimated rank parameter (R*) upon receiving a new image data unit (P*). The classification section thus performs the emulation job based on (classification) filter rules.

A computerized classification device may for example be a data processing device containing an application specific integrated circuit (ASIC). The application specific integrated circuit (ASIC) may be optimized to perform the attributions, which are defined by the filter rules (16), at high computational speed.

Alternatively, a computerized classification device may be an electronic control unit of a vehicle (1, 1') or a multipurpose computer.

A classification software product according to the present disclosure may be executed on a data processing device, in particular on the electronic control unit or multipurpose computer, so that it performs the steps, which are defined for the computer implemented classification method.

A classification software product may be stored on a physical data carrier or be transmitted through a communication interface. It comprises instructions for executing the computer implemented classification method (CM) .

The computer implemented classification method (CM) comprises (classification) filter rules (16), which are designed to attribute an estimated rank parameter (R*) based on image information contained in an image data unit (P*).

In the following explanations, the (internal) filter rules (16), which are created by the emulator creation method (EM) or respectively the AI method or AI software product (9) (i.e. the trained neuronal network created at a manufacturer), and the (classification) filter rules (16), which are used in a classification method, classification device or classification software product (transferred or replicated trained neuronal network), may be the same or equivalent. Alternatively, the (internal) filter rules and the (classification) filter rules may be different. For example, based on the (internal) filter rules initially created at the manufacturer (structure definition for a neuronal network and values for the weights and biases, which resulted from the training process), functionally equivalent or even improved (classification) filter rules may be created for use in the classification method, classification method or classification software product, which is/are used in the field. The creation of functionally equivalent or improved filter rules may for example by be based on using different versions of AI software modules, software transformation adapters and so on. However, the attribution (estimated rank parameter to image data unit), that is made by those differing (internal) filter rules and (classification) filter rules should be the same or very similar.

The image data unit (P*) may be gathered in any arbitrary way. It may be received through an interface, read from a data carrier, received as a data stream, received through a socket or be sensed directly by a vision sensor (2, 2').

The image information contained in the image data unit (P*) may (or may not) be subject to a visibility degradation based on at least one vision degrading influence (5, 6, 7, 8) as illustrated in figure 1. Alternatively or additionally, any other type of vision degrading influence may occur.

By applying the (classification) filter rules (16) to the image data unit (P*), an estimated rank parameter (R*) will be attributed. This estimated rank parameter (R*) is outputted. It indicates a rank within the absolute visibility rank order (15). The estimated rank parameter (R*) will thus be a value between the minimum value (Min) and the maximum value (Max), so that the estimated rank parameter (R*) is representative for the level of the visibility degradation, by which the respective new image data unit (P*) is affected.

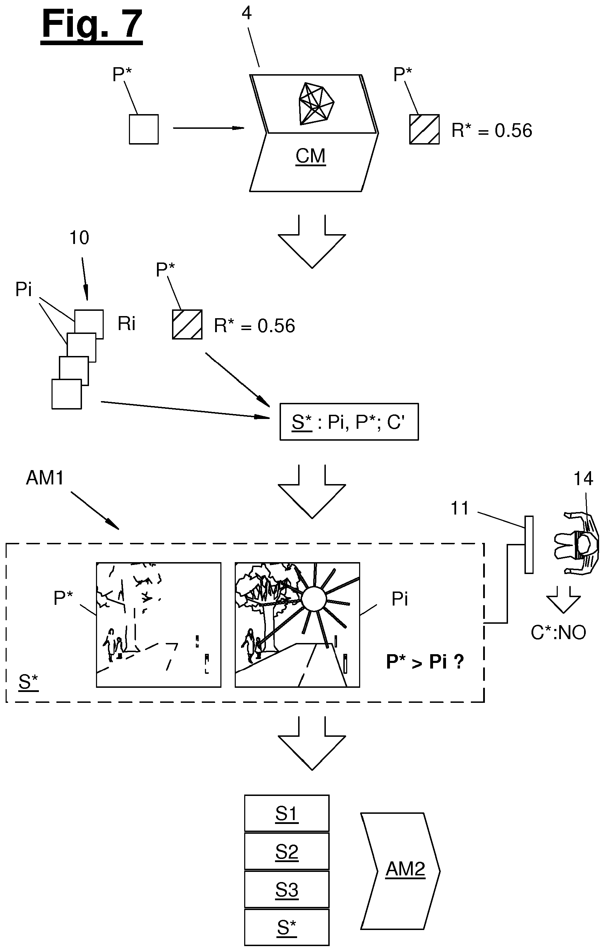

Figure 7 illustrates a computer implemented testing method according to the present disclosure. The testing method is used for evaluating and/or improving a data set (10), which may have been created according to above explanations. Correspondingly, the testing method may be used to (directly or indirectly) improve the AI system, the classification device or any other protection entity according to the present disclosure. The computer implemented testing method comprises the following steps.

A new data unit (P*) is gathered. It concerns - again - the environment of a vehicle (1, 1').

The image data unit (P*) is evaluated by a computer implemented classification method (CM) according to above explanations. Thereby, an estimated rank parameter (R*) is associated to the new image data unit (P*).

This estimated rank parameter (R*) is then tested for consistency with the ground truth, as explained below.

A new subset (S*) is created containing the new image data unit (P*) and at least one further image data unit (Pi) that is selected from the already existing training data set (10) or the main set (M) of image data units (PI, P2, P3, P4).

The new image data unit (P*) may contain image information that is affected by visibility degradation. In the example of figure 7, the newly gathered image data unit (P*) may be effected by mist or fog, i.e. a vision degrading influence, which was previously not included in the image data units (P1, P2, P3, P4) of the main data set (M). In such a situation it is possible but not sure, whether the filter rules (16) of the computer implemented classification method in the momentary form will attribute an estimated rank parameter (R*) which correctly fits to the ground truth or the underlining decisions of the evaluator (14).

In the testing method according to the present disclosure, based on the estimated rank parameter (R*), which was attributed based on the present filter rules (16), and based on the known rank parameter (Ri), which is associated to the further image data unit (Pi), a presumed comparison result (C') is established.

The selected image data united (Pi) and the new image data unit (P*) are displayed at least once to a (human) evaluator (14) for validation of the presumed comparison result (C'), in particular by showing them on the display (11). If the emulated rank parameter (R*) was correctly attributed by the present filter rules (16), the (human) evaluator should (in the one validation or in a (great) majority of the validations) come to the same assessment on the relative order of the image data units (Pi, P*), as it is expressed by the presumed comparison result (C')

An input parameter is gathered that identifies a validation comparison result (C*). The input parameter may be provided by the evaluator (14) in the same way as explained above for the assessment method.

If the presumed comparison result (C') is (once or preferentially multiple times) equal to the validation comparison result (C*), conformity with the ground truth is determined. The testing of the filter rules then provides a positive result. The image data unit (P*) and the associated estimated rank parameter (R*) may be thus added to the training data set (10). Alternatively or additionally, a validation positive result may be stored.

Including the new image data unit (P*) and the emulated rank parameter (R*) (which was confirmed in the positive test result) in the training data set (10) may broaden its volume. When the emulator creation method (EM) is performed again, new or improved filter rules may be created, which may however be very similar to the previous version.

If the presumed comparison result (C') deviates from the validation comparison result (C*), disconformity is determined. Then, the validation negative result may be stored. It may be determined that testing of the filter rules shows a potential for improvement. In that case, further iterations for the assessment method (AM) steps should be applied, so that the newly gathered image data unit (P*) is included in at least one further subset (S*), which is then processed. As a result, the newly gathered image data unit (P*) will receive another rank parameter, which deviates from the emulated rank parameter (R*). If the newly gathered image data unit (P*) and the new rank parameter are included in the training data set (10), a real knowledge gain is achieved. Applying the emulator creation method (EM) again on this training data set may create new filter rules, which in fact deviate from the previous ones and are capable of improved classification.

In the testing, validation comparison results (C*) may be gathered for only one comparison of the newly gathered image data unit (P*) with one existing image data unit (Pi) of the main set (M). Alternatively, several validation comparison results (C*) may be gathered for multiple such comparisons / several newly created subsets (S*) .

In above example, the new image data unit (P*) can be a completely new image data unit. However, for the testing method, also any image data unit contained in the training data set, which has not been processed in any subset, yet, may be used as a new data unit (P*). The testing method may thus be applied to a partly trained filter rules / a partly trained neuronal network, which were/was only confronted with a share of the image data units contained in the training data set. In other words, the training data set may comprise one or several image data units, which are reserved for testing. During each test iteration, at least one of those reserved image data units may be used as a "new image data unit" in the testing method.

Figure 6 shows in the lower half a vehicle control device (13) according to the present disclosure. This vehicle control device may in particular be adapted to an automobile (1') or any other kind of vehicle as mentioned above. The vehicle (1') in the lower part of figure 6 may however not be a test vehicle (1) as explained above, but rather be a privately owned car or vehicle (application domain vehicle).

The vehicle control device (13) may comprise a vision sensor (2') for gathering image data units (P*) concerning the environment of the vehicle (1'). Alternatively or additionally, the vehicle control device (13) may comprise a vision data interface (18) for retrieving image data units (P*). Through the vision data interface (18), the vehicle control device (13) may be connected to an external vision sensor, which is not a part of the vehicle control device (13).

The vehicle control device (13) further comprises a vehicle control section (17). This may, as explained above, be any kind of data processing device, in particular an ASIC, an electronic control unit or a multipurpose computer. The vehicle control section (17) is designed to perform vehicle control actions based on image data units (P*) that are received from the vision sensor (2') and/or gathered through the vision data interface (18).

The vehicle control device (13) according to the present disclosure further comprises a computerized classification device (4) (as explained above).

The vehicle control device (13) is designed such that a visibility degradation safety parameter (Z*) is calculated based on at least one presumed rank parameter (R*), which is outputted by the computerised classification device (4) for at least one newly gathered image data unit (P*).

The vehicle control section (17) is designed to suspend or change a vehicle control action, if or when the visibility degradation safety parameter (Z*) is insufficient in view of a safety threshold.

The visibility degradation safety parameter (Z*) may be calculated in any arbitrary way. For example, the visibility degradation safety parameter (Z*) may be a mean value, in particular a floating arithmetic mean or a geometric mean, among several estimated rank parameters (R*), which were attributed to a series of newly gathered image data units (P*). Alternatively, the value of the estimated rank parameter (R*) may be used directly as the visibility degradation safety parameter (Z* = R*).

The visibility degradation safety parameter (Z*) may be compared to a safety threshold, which is defined as a static value. Alternatively, the safety threshold may be defined dynamically, in particular based on a traffic situation, vehicle control target, driver active/inactive status and so on. Likewise, several visibility degradation safety parameters (Z*) may be defined or dynamically calculated for different uses, e.g. different parameters (Z*) for safety-related functions (e.g. collision avoidance, lane or distance keeping etc.) and convenience functions (free parking space highlighting etc.).

When the visibility degradation safety parameter (Z*) is considered insufficient, the vehicle control section may change a vehicle control action under a safety scheme.

Such a safety scheme may provide that a risk-reducing control action is selected or preferred, e.g. that the driving speed is lowered, that the driver is given an alert or that further vehicle control actions are based more on other sensor systems of the vehicle (1'). In case of insufficiently reliable vision information, control actions may for example be based more on radar information and/or car-to-car communication based information and/or navigation map based information and so on. Alternatively or additionally, a vehicle control action under a safety scheme may command cleaning of the vision sensor.

A vehicle comprising a vehicle control device (13) according to above explanations offers great advantages. In particular, as reliability assessment of vision information is made available, any automated or autonomous vehicle control action can be based on vision sensor information only, when this type of input information is considered sufficiently trustworthy. Potentially risk increasing control actions based on image information, which is affected by visibility degradation to an unacceptable degree, can be avoided. Therefore, the classification technique according to the present disclosure and its application in one or several computer implemented methods or computerized devices may increase the safety of autonomous driving and highly automated driving.

Variations of the invention are possible in various forms. In particular, the features disclosed for the various embodiments may arbitrarily be combined or exchanged. Every computer implemented method according to the present disclosure may be incorporated in a respective software product, i.e. an assessment software product, an emulated creation software product, a classification software product (as explained above), a testing software product or a vehicle control software product. Each of the software products may contain instructions for executing the respective computer implemented method, in particular when the software product is executed on an electronic control unit, a multipurpose computer or any other suitable data processing device. Each of those software products may be stored on a physical data carrier or be transmitted through an interface, in particular a communication interface.

Likewise, based on each of the disclosed computer implemented methods, a respective computerized device may be created, in particular a computerized assessment device, a computerized emulated creation device, a computerized classification device (as explained above), a computerized testing device and/or a computerized vehicle control device (as explained above).

### LIST OF REFERENCES

- 1: Test vehicle
- 1': Ego vehicle
- 2: Vision sensor (on test vehicle)
- 2': Vision sensor
- 3: Environment
- 4: Computerized classification device
- 5: Droplets / vision degrading influence
- 6: Glare / vision degrading influence
- 7: Darkness / vision degrading influence
- 8: Contamination / vision degrading influence
- 9: AI software module / AI-algorithm / Convolutional Neuronal Network - CNN
- 10: Training data set
- 10*: Classification result
- 11: Display
- 12: Transformation device
- 13: Vehicle control device
- 14: Evaluator
- 15: Absolute visibility rank order
- 16: Filter rules / Emulator / trained neuronal network
- 17: Vehicle control section
- 18: Vision data interface
- AM: Assessment method
- C, Ci: Comparison result
- C': Presumed comparison result
- C*: Validation comparison result
- CM: Classification method
- EM: Emulator creation method
- ELO: Elo transformation
- M: Main set
- P, Pi: Image data unit / test image
- P*: New image data unit / real driving image
- QM: Qualification Method
- R, Ri: Rank parameter / Classification score
- R*: Emulated rank parameter
- S, Si: Subset
- S*: New Subset
- T1, T2: Target range
- TM: Transformation method
- VC: Vehicle control method
- Z*: Visibility degradation safety parameter

## Claims

1. Computer implemented assessment method for creating a training data set (10), wherein the training data set (10) is in particular designed to serve as an input and ground truth for a computer implemented artificial intelligence (AI) method for evaluation of image visibility degradation, and wherein the assessment method comprises following steps:
- Gathering a main set (M) of image data units (P1, P2, P3, P4) concerning the environment (3) of a vehicle (1, 1'), wherein at least a share of the image data units (PI, P2, P3, P4) contains image information which is subject to a visibility degradation based on at least one vision degrading influence (5, 6, 7, 8);
- Defining multiple subsets (S1, S2, S3, S4) of image data units (P1, P2, P3, P4), and gathering comparison results (C1, C2, C3) for a relative comparison of the image data units (P1,P2; P3,P4; P3,P2) in a respective subset (S1, S2, S3), wherein the comparison result (C1, C2, C3) is an input parameter provided by a human labeler (14), and wherein the comparison result (C1, C2, C3) is associated to the respective subset (S1, S2, S3) and indicates a relative order of the visibility or visibility degradation among the image data units (P1,P2; P3,P4; P3,P2) in the subset (S1, S2, S3);
- Processing multiple subsets (S1, S2, S3) and the respective comparison results (C1, C2, C3), wherein an absolute visibility rank order (15) is established for the image data units (P1, P2, P3, P4) in the processed subsets (S1, S2, S3), wherein the absolute visibility rank order provides quantitative evaluation on the visibility degradation on a single scale and independently from a specific vision degrading influence;
- Associating a rank parameter (R1, R2, R3, R4) to an image data unit (P1, P2, P3, P4), wherein the rank parameter (R1, R2, R3, R4) is calculated based on multiple comparison results (C1, C2, C3) of the processed subsets (S1, S2, S3), and wherein the rank parameter (R1, R2, R3, R4) defines a rank within the absolute visibility rank order (15);
- Outputting a training data set (10) comprising the image data units (P1, P2, P3, P4) of the processed subsets (S1, S2, S3) and the associated rank parameters (R1, R2, R3, R4).

2. Computer implemented assessment method according to claim 1, wherein the gathering of comparison results (C1, C2, C3) comprises following steps, which are performed multiple times:
- Selecting a subset (S1, S2, S3) and displaying the included image data units (P1, P2, P3, P4) to the human labeler;
- Gathering an input parameter from the human labeler that identifies the comparison result (C1, C2, C3) for the subset (S1, S2, S3).

3. Computer implemented assessment method according to any of claims 1 or 2, wherein the definition of subsets (S1, S2, S3) and their processing, and/or the calculation of rank parameters (R1, R2, R3, R4) is performed iteratively, in particular until a predefined rank order evaluation criterion is fulfilled (QM).

4. Computer implemented assessment method according to any of the preceding claims, wherein the definition of subsets (S1, S2, S3) comprises:
- Calculating a subset count parameter, which indicates in how many already existing subsets (S1, S2, S3) an image data unit (P1, P2, P3, P4) of the main set (M) is included;
- If the subset count parameter of an image data unit (P1) is below a predefined count threshold, defining a new subset (S*) with the selected image data unit (P1) and a further image data unit (P4) from the main set (M);
- Processing the new subset (S*).

5. Computer implemented assessment method according to any of the preceding claims, wherein the definition of subsets (S1, S2, S3) comprises the following steps, which are performed at least once:
- Selecting a first image data unit (PI);
- Analyzing already calculated rank parameters (R1, R2, R3, R4) of multiple image data units (P1, P2, P3, P4) in the main set (M);
- Identifying at least one target range (T1, T2) within the absolute rank order (15);
- Selecting at least one further image data unit (P4), whose rank parameter (R4) is located in the target range (T1, T2);
- Defining a new subset (S*) containing the selected image data units (P1, P4) and processing this new subset (S*).

6. Computer implemented assessment method according to any of the preceding claims, wherein the calculation of a rank parameter (R1, R2, R3, R4) is performed by using an Elo rating method (ELO).

7. Computer readable training data set (10), in particular stored on a physical data carrier or transmitted through a data communication interface, wherein the training data set (10) is created by a computer implemented assessment method according to claim 1 and comprises:
- Multiple image data units (P1, P2, P3, P4) concerning the environment (3) of a vehicle (1, 1'), wherein at least a share of the image data units (P1, P2, P3, P4) contains image information which is subject to a visibility degradation based on at least one vision degrading influence (5, 6, 7, 8);
- Multiple rank parameters (R1, R2, R3, R4);
wherein to at least a share of the image data units (P1, P2, P3, P4) a respective rank parameter (R1, R2, R3, R4) is associated, and wherein each rank parameter (R1, R2, R3, R4) defines a rank of the associated image data unit (P1, P2, P3, P4) within an absolute visibility rank order (15), which absolute visibility rank order (15) provides quantitative evaluation on the visibility degradation on a single scale and independently from a specific vision degrading influence.

8. Computer implemented method to emulate the visibility degradation comprising the following steps:
- Feeding a training data set (10) as an input to a computer implemented artificial intelligence method or an artificial intelligence software module (9), wherein
_{°} The training data set (10) contains image data units (P1, P2, P3, P4) and associated rank parameters (R1, R2, R3, R4), and wherein the training data set (10) is created by a computer implemented assessment method according to any of claims 1 to 6, and wherein the training data set (10) is designed according to claim 7; and wherein
∘ The training data set (10) is defined as the ground truth for the artificial intelligence method or the artificial intelligence software module (9); and wherein
∘ the artificial intelligence method or the artificial intelligence software module (9) analyses the image information contained in the image data units (P1, P2, P3, P4) and establishes filter rules (16), wherein the filter rules are implemented as a convolutional neural network and provide an attribution from the image information to the associated rank parameter (R1, R2, R3, R4) of the respective image data unit (P1, P2, P3, P4), such that the filter rules (16) including a trained convolutional neural network emulate an evaluation of the visibility degradation of image information contained in the image data units (P1, P2, P3, P4) in accordance with the ground truth;
- Storing or transmitting the filter rules (16) OR storing or transmitting the artificial intelligence software module (9) OR configuring a classification software module based on the filter rules (16) OR configuring a computerized classification device (4) based on the filter rules (16).

9. Computer implemented classification method comprising filter rules (16), which are implemented as a convolutional neuronal network and designed to attribute an estimated rank parameter (R*) based on image information contained in an image data unit (P*), and wherein the filter rules (16) are created by a computer implemented method according to claim 8 and include a trained convolutional neural network, and wherein the classification method comprises the following steps:
- Gathering a new image data unit (P*) concerning the environment of a vehicle (1, 1'), in particular a real driving image, wherein image information which is contained in the new image data unit (P*) may be subject to a visibility degradation based on at least one vision degrading influence (5, 6, 7, 8);
- Applying the (classification) filter rules (16) to the new image data unit (P*);
- Outputting the estimated rank parameter (R*), which is attributed to the new image data unit (P*) by the filter rules (16), wherein the estimated rank parameter (R*) indicates a rank within an absolute visibility rank order (15) between a minimum value (Min) and a maximum value (Max), so that the estimated rank (R*) is representative for a degree of the visibility degradation, wherein the absolute visibility rank order provides quantitative evaluation on the visibility degradation on a single scale and independently from a specific vision degrading influence.

10. Classification software product, in particular stored on a physical data carrier or transmitted through a communication interface, wherein the classification software product comprises instructions for executing a computer implemented classification method according to claim 9.

11. Computerized classification device, in particular comprising
- a vision sensor (2, 2') for gathering a new image data unit (P*) concerning the environment (3) of a vehicle (1, 1') and/or a vision data interface (18) for retrieving a new image data unit (P*), wherein the new image data unit (P*) is in particular a real-driving image;
wherein the classification device (4) is adapted to output an estimated rank parameter (R*) upon receiving a new image data unit (P*); and wherein the computerized classification device (4) comprises a classification section which is designed to execute a computer implemented classification method according to claim 9.

12. Computer implemented testing method for evaluating or improving a training data set (10) according to claim 7 or a computer implemented classification method according to claim 9, wherein the computer implemented testing method comprises the following steps:
- A new image data unit (P*) concerning the environment of a vehicle (1, 1'), in particular a real-driving image, is gathered or taken from a set of unprocessed image data units within the training data set (10);
- The new image data unit (P*) is evaluated by a computer implemented classification method according to claim 10, wherein an estimated rank parameter (R*) is associated to the new image data unit (P*);
- A new subset (S*) is created containing the new image data unit (P*) and at least one further processed image data unit (P1, P2, P3, P4) which is selected from the training data set (10);
- Based on the estimated rank parameter (R*) and a known rank parameter (R1, R2, R3, R4), which is associated to the further image data unit (P1, P2, P3, P4), a presumed comparison result (C') is established;
- The image data units (P*, P3) are displayed at least once for validation of the presumed comparison result (C');
- an input parameter is gathered that identifies a validation comparison result (C*);
- If the presumed comparison result (C') is equal to the validation comparison result (C*), the new image data unit (P*) and the associated estimated rank parameter (R*) are added to the training data set (10) and/or a validation positive result is stored, AND/OR
- If the presumed comparison result (C*) deviates from the validation comparison result (C'), a validation negative result is stored.

13. Vehicle control device, in particular adapted to an automobile (1'), the vehicle control device (13) comprising
- a vision sensor (2') for gathering new image data units (P*) concerning the environment of the vehicle (1') AND/OR a vision data interface (18) for retrieving new image data units (P*), in particular wherein the new image data units (P*) are real-driving images; AND
- a vehicle control section (17), which is designed (VC) to perform vehicle control actions based on the new image data units (P*) that are received from the vision sensor (2') and/or the vision data interface (18), **characterized in that**
- the vehicle control device (13) comprises a computerized classification device (4) according to claim 11; and wherein
- the vehicle control device (13) is designed such that a visibility degradation safety parameter (Z*) is calculated based on at least one presumed rank parameter (R*), which is outputted by the computerized classification device (4) for at least one newly gathered image data unit (P*); and wherein
- the vehicle control section (17) is designed to suspend or change a vehicle control action, if or when the visibility degradation safety parameter (Z*) is insufficient in comparison to a safety threshold.

14. Vehicle, in particular automobile, comprising a vehicle control device (13) according to claim 13.

## Patentansprüche

1. Computerimplementiertes Bewertungsverfahren zur Bereitstellung eines Trainingsdatensatzes (10), wobei der Trainingsdatensatz (10) insbesondere dazu ausgebildet ist, als Eingabe und Grundwahrheit für ein computerimplementiertes Künstliche-Intelligenz-Verfahren für die Auswertung der Bildsichtbarkeitseinschränkung zu dienen, und wobei das Bewertungsverfahren die folgenden Schritte umfasst:
- Beziehen einer Hauptmenge (M) an Bilddateneinheiten (P1, P2, P3, P4) betreffend die Umgebung (3) eines Fahrzeugs (1,1'), wobei zumindest ein Teil der Bilddateneinheiten (P1, P2, P3, P4) Bildinformationen umfasst, die von einer Sichtbarkeitseinschränkung basierend auf mindestens einem die Sichtbarkeit vermindernden Einfluss (5, 6, 7, 8) betroffen ist;
- Definition mehrerer Untermengen (S1, S2, S3, S4) von Bilddateneinheiten (P1, P2, P3, P4) und Beziehen von Vergleichsergebnissen (C1, C2, C3) für einen relativen Vergleich der Bilddateneinheiten (P1,P2; P3,P4; P3,P2) in einer jeweiligen Teilmenge, wobei das Vergleichsergebnis (C1, C2, C3) ein Eingabeparameter ist, der von einem menschlichen Markierer (14) bereitgestellt ist, und wobei das Vergleichsergebnis (C1, C2, C3) der jeweiligen Teilmenge (S1, S2, S3) zugeordnet ist und eine relative Ordnung der Sichtbarkeit oder Sichtbarkeitseinschränkung unter den Bilddateneinheiten (P1,P2; P3,P4; P3,P2) in der Teilmenge (S1, S2, S3) angibt;
- Verarbeiten mehrerer Teilmengen (S1, S2, S3) und der jeweiligen Vergleichsergebnisse (C1, C2, C3), wobei für die Bilddateneinheiten (P1, P2, P3, P4) in den verarbeiteten Teilmengen (S1, S2, S3) eine absolute Sichtbarkeitsrangordnung (15) gebildet wird, wobei die absolute Sichtbarkeitsrangordnung auf einer einzelnen Skala und unabhängig von den spezifischen, die Sichtbarkeit einschränkenden Einflüssen ein quantitatives Maß für die Sichtbarkeitseinschränkung schafft;
- Zuordnen eines Rangparameters (R1, R2, R3, R4) zu einer Bilddateneinheit (P1, P23, P3, P4), wobei der Rangparameter (R1, R2, R3, R4) auf Basis mehrerer Vergleichsergebnisse (C1, C2, C3) der verarbeiteten Teilmengen (S1, S2, S3) berechnet wird, und wobei der Rangparameter (R1, R2, R3, R4) einen Rang innerhalb der absoluten Sichtbarkeitsrangordnung (15) definiert;
- Ausgeben eines Trainingsdatensatzes (10) umfassend die Bilddateneinheiten (P1, P2, P3, P4) der verarbeiteten Teilmengen (S1, S2, S3) und die zugeordneten Rangparameter (R1, R2, R3, R4) .

2. Computerimplementiertes Bewertungsverfahren gemäß Anspruch 1, wobei das Beziehen der Vergleichsergebnisse (C1, C2, C3) die folgenden Schritte umfasst, die mehrfach ausgeführt werden:
- Auswählen einer Teilmenge (S1, S2, S3) und Anzeigen der beinhalteten Bilddateneinheiten (P1, P2, P3, P4) an den menschlichen Markierer;
- Beziehen eines Eingabeparameters von dem menschlichen Markierer (14), welcher das Vergleichsergebnis (C1, C2, C3) für die Teilmenge (S1, S2, S3) identifiziert.

3. Computerimplementiertes Bewertungsverfahren gemäß einem der Ansprüche 1 oder 2, wobei die Definition der Teilmengen (S1, S2, S3) und deren Verarbeitung, und/oder die Berechnung von Rangparametern (R1, R2, R3, R4) iterativ ausgeführt werden, insbesondere, bis ein vorbestimmtes Rangordnungsbewertungskriterium (QM) erfüllt ist.

4. Computerimplementiertes Bewertungsverfahren gemäß einem der vorhergehenden Ansprüche, wobei die Definition von Teilmengen (S1, S2, S3) umfasst:
- Berechnen eines Teilmengenzielparameters, der angibt, in wie vielen bereits existierenden Teilmengen (S1, S2, S3) eine Bilddateneinheit (P1, P2, P3, P4) der Hauptmenge (M) beinhaltet ist;
- wenn der Teilmengenzielparameter für eine Bilddateneinheit (P1) unter einem vordefinierten Zählgrenzwert ist, Definieren einer neuen Teilmenge (S*) mit der ausgewählten Bilddateneinheit (P1) und einer weiteren Bilddateneinheit (P4) aus der Hauptmenge (M);
- Verarbeiten der neuen Teilmenge (S*).

5. Computerimplementiertes Bewertungsverfahren gemäß einem der vorhergehenden Ansprüche, wobei die Definition der Teilmengen (S1, S2, S3) die folgenden Schritte umfasst, die zumindest einmalig ausgeführt werden:
- Auswählen einer ersten Bilddateneinheit (P1);
- Analysieren von bereits berechneten Rangparametern (R1, R2, R3, R4) von mehreren Bilddateneinheiten (P1, P2, P3, P4) in der Hauptmenge (M);
- Identifizieren mindestens eines Zielbereichs (T1, T2) innerhalb der absoluten Rangordnung (15) ;
- Auswählen mindestens einer weiteren Bilddateneinheit (P4), deren Rangparameter (R4) in dem Zielbereich (T1, T2) liegt;
- Definieren einer neuen Teilmenge (S*), umfassend die ausgewählten Bilddateneinheiten (P1, P4) und Verarbeiten dieser neuen Teilmenge (S*) .

6. Computerimplementiertes Bewertungsverfahren gemäß einem der vorhergehenden Ansprüche, wobei die Berechnung eines Rangparameters (R1, R2, R3, R4) unter Nutzung eines ELO-Einstufungsverfahrens (ELO) erfolgt.

7. Computerimplementierter Trainingsdatensatz (10), insbesondere gespeichert auf einem physikalischen Datenträger oder übermittelt durch eine Datenkommunikationsschnittstelle, wobei der Trainingsdatensatz (10) durch ein computerimplementiertes Bewertungsverfahren gemäß Anspruch 1 erzeugt wird und umfasst:
- Mehrere Bilddateneinheiten (P1, P2 P3, P4) betreffend die Umgebung (3) eines Fahrzeugs (1,1'), wobei zumindest ein Teil der Bilddateneinheiten (P1, P2, P3, P4) Bildinformationen enthält, die durch eine Sichtbarkeitseinschränkung basierend auf mindestens einem die Sichtbarkeit beeinträchtigenden Einfluss (5,6,7,8) betroffen sind;
- mehrere Rangparameter (R1, R2, R3, R4);
wobei ein jeweiliger Rangparameter (R1, R2, R3, R4) zumindest einem Teil der Bilddateneinheiten (P1, P2, P3, P4) zugeordnet ist, und wobei jeder Rangparameter (R1, R2, R3, R4) einen Rang der zugeordneten Bilddateneinheit (P1, P2, P3, P4) innerhalb einer absoluten Sichtbarkeitsrangordnung (15) definiert, wobei die absolute Sichtbarkeitsrangordnung (15) ab einer einzelnen Skala und unabhängig von einem spezifischen, die Sichtbarkeit einschränkenden Einfluss ein quantitatives Maß für die Sichtbarkeitseinschränkung angibt.

8. Computerimplementiertes Verfahren zur Emulierung der Sichtbarkeitseinschränkung umfassend die folgenden Schritte:
- Zuführen eines Trainingsdatensatzes (10) als Eingabe an ein computerimplementiertes Künstliche-Intelligenz-Verfahren oder an ein Künstliche-Intelligenz-Softwaremodul (9), wobei
∘ der Trainingsdatensatz (10) Bilddateneinheiten (P1, P2, P3, P4) und zugeordnete Rangparameter (R1, R2, R3, R4) beinhaltet, und wobei der Trainingsdatensatz (10) durch ein computerimplementiertes Bewertungsverfahren gemäß einem der Ansprüche 1 bis 6 erzeugt ist, und wobei der Trainingsdatensatz (10) nach Anspruch 7 ausgebildet ist; und wobei
∘ der Trainingsdatensatz (10) als eine Grundwahrheit für das Künstliche-Intelligenz-Verfahren oder das Künstliche-Intelligenz-Softwaremodul (9) definiert ist; und wobei Das Künstliche-Intelligenz-Verfahren oder das Künstliche-Intelligenz-Softwaremodul (9) die Bildinformationen analysiert, die in den Bilddateneinheiten (P1, P2, P3, P4) enthalten sind, und Filterregeln (16) erzeugt, wobei die Filterregeln als ein konvolutionales Netz implementiert sind und eine Zuweisung von der Bildinformation zu dem zugeordneten Rangparameter (R1, R2, R3, R4) der jeweiligen Bilddateneinheit (P1, P2, P3, P4) schaffen, sodass die Filterregeln (16), die ein trainiertes, konvolutionales, neuronales Netz beinhalten, eine Bewertung der Sichtbarkeitseinschränkung der Bildinformation emulieren, die in den Bilddateneinheiten (P1, P2, P3, P4) enthalten ist, und zwar in Übereinstimmung mit der Grundwahrheit;
- Speichern oder Übertragen der Filterregeln (16) ODER Speichern oder Übertragen des Künstliche-Intelligenz-Softwaremoduls (9) ODER Konfigurieren eines Klassifizierungssoftwaremoduls, basierend auf den Filteregeln (16) ODER Konfigurieren einer computergestützten Klassifizierungseinrichtung (4), basierend auf den Filterregeln (16).

9. Computerimplementiertes Klassifizierungsverfahren umfassend Filterregeln (16), die als ein konvolutionelles, neuronales Netz implementiert und dazu ausgebildet sind, einen geschätzten Rangparameter (R*) basierend auf Bildinformationen zuzuweisen, die in einer Bilddateneinheit (P*) enthalten sind, wobei die Filterregeln (16) durch ein computerimplementiertes Verfahren gemäß Anspruch 8 erzeugt sind und ein trainiertes, konvolutionelles, neurales Netz beinhalten, und wobei das Klassifizierungsverfahren die folgenden Schritte umfasst:
- Beziehen einer neuen Bilddateneinheit (P*) betreffend die Umgebung eines Fahrzeugs (1,1'), insbesondere ein reales Fahrtbild, wobei Bildinformationen, die in der neuen Bilddateneinheit (P*) beinhaltet sind, von einer Sichtbarkeitseinschränkung auf Basis mindestens eines die Sichtbarkeit einschränkenden Einflusses (5, 6, 7, 8) betroffen sein kann;
- Anwenden der (Klassifizierung-)Filterregeln (16) auf die neue Bilddateneinheit (P*);
- Ausgeben des geschätzten Rangparameters (R*), der durch die Filterregeln (16) der neuen Bilddateneinheit (P*) zugeordnet wird, wobei der geschätzte Rangparameter (R*) einen Rang innerhalb einer absoluten Sichtbarkeitsrangordnung (15) zwischen einem Minimalwert (Min) und einem Maximalwert (Max) angibt, sodass der geschätzte Rang (R*) den Grad der Sichtbarkeitseinschränkung repräsentiert, und wobei die absolute Rangordnung auf einer einzelnen Skala und unabhängig von einem spezifischen, die Sichtbarkeit einschränkenden Einfluss ein quantitatives Maß der Sichtbarkeitseinschränkung angibt.

10. Klassifizierungssoftwareprodukt, insbesondere gespeichert auf einem physikalischen Datenträger oder übermittelt über eine Kommunikationsschnittstelle, wobei das Klassifizierungssoftwareprodukt Anweisungen für die Ausführung eines computerimplementierten Klassifizierungsverfahrens gemäß Anspruch 9 umfasst.

11. Computerbasierte Klassifizierungseinrichtung, insbesondere umfassend:
- Einen bildgebenden Sensor (2, 2') zum Beziehen einer neuen Bilddateneinheit (P*) betreffend die Umgebung (3) eines Fahrzeugs (1, 1') und/oder eine bildgebende Datenschnittstelle (18) zum Beziehen einer neuen Bilddateneinheit (P*), wobei die neue Bilddateneinheit (P*) insbesondere ein reales Fahrtbild ist;
wobei die Klassifizierungseinrichtung (4) dazu angepasst ist, auf den Empfang der neuen Bilddateneinheit (P*) hin einen geschätzten Rangparameter (R*) auszugeben; und wobei die computerbasierte Klassifizierungseinrichtung (4) einen Klassifizierungsabschnitt umfasst, der dazu ausgebildet ist, ein computerimplementiertes Klassifizierungsverfahren gemäß Anspruch 9 auszuführen.

12. Computerimplementiertes Testverfahren zur Bewertung oder Verbesserung eines Trainingsdatensatzes (10) gemäß Anspruch 7 oder eines computerimplementierten Klassifizierungsverfahrens gemäß Anspruch 9, wobei das computerimplementierte Testverfahren die folgenden Schritte umfasst:
- Eine neue Bilddateneinheit (P*) betreffend die Umgebung eines Fahrzeugs (1,1'), insbesondere ein reales Fahrtbild, wird bezogen oder aus einer Menge von unverarbeiteten Bilddateneinheiten innerhalb des Trainingsdatensatzes (10) entnommen;
- die neue Bilddateneinheit (P') wird durch ein computerimplementiertes Klassifizierungsverfahren gemäß Anspruch 10 bewertet, wobei der neuen Bilddateneinheit (P*) ein geschätzter Rangparameter (R*) zugeordnet wird;
- eine neue Teilmenge (S*) wird erzeugt umfassend die neue Bilddateneinheit (P*) und mindestens eine weitere verarbeitete Bilddateneinheit (P1, P2, P3, P4), die aus dem Trainingsdatensatz (10) ausgewählt wird;
- basierend auf dem geschätzten Rangparameter (R*) und einem bekannten Rangparameter (R1, R2, R3, R4), welcher der weiteren Bilddateneinheit (P1, P2, P3, P4) zugeordnet ist, wird ein vermutetes Vergleichsergebnis (C') erzeugt;
- die Bilddateneinheiten (P*, P3) werden zumindest einmalig zur Validierung des vermuteten Vergleichsergebnisses (C*) angezeigt;
- ein Eingabeparameter wird gezogen, der ein Validierungsvergleichsergebnis (C*) angibt;
- wenn das vermutete Vergleichsergebnis (C') dem Validierungsvergleichsergebnis (C*) entspricht, werden die neue Bilddateneinheit (P*) und der zugeordnete geschätzte Rangparameter (R*) dem Trainingsdatensatz (10) hinzugefügt und/oder ein positives Validierungsergebnis wird gespeichert, UND/ODER
- wenn das vermutete Vergleichsergebnis (C*) von dem Validierungsvergleichsergebnis (C') abweicht, wird ein negatives Validierungsergebnis gespeichert.

13. Fahrzeugsteuereinrichtung, insbesondere angepasst an ein Automobil (1'), wobei die Fahrzeugsteuereinrichtung (13) umfasst
- einen bildgebenden Sensor (2') zum Beziehen von neuen Bilddateneinheiten (P*) betreffend die Umgebung des Fahrzeugs (1') UND/ODER eine bildgebende Datenschnittstelle (18) zum Beziehen neuer Bilddateneinheiten (P*), wobei die neuen Bilddateneinheiten (P*) insbesondere reale Fahrtbilder sind; UND
- einen Fahrzeugsteuerabschnitt (17), der dazu ausgebildet ist (VC), Fahrzeugsteuerhandlungen basierend auf neuen Bilddateneinheiten (P*) auszuführen, die von dem bildgebenden Sensor (2') und/oder der bildgebenden Datenschnittstelle (18) empfangen werden, **dadurch gekennzeichnet, dass**
- die Fahrzeugsteuereinrichtung (13) eine computerbasierte Klassifizierungseinrichtung (4) gemäß Anspruch 11 umfasst; und wobei
- die Fahrzeugsteuereinrichtung (13) derart ausgebildet ist, dass ein Sichtbarkeitseinschränkung-Sicherheitsparameter (Z*) basierend auf mindestens einem geschätzten Rangparameter (R*) berechnet wird, der von der computerbasierten Klassifizierungseinrichtung (4) für mindestens eine neubezogene Bilddateneinheit (P*) ausgegeben wird; und wobei
- der Fahrzeugsteuerabschnitt (17) dazu ausgebildet ist, die Fahrzeugsteuerhandlung auszusetzen oder zu ändern, falls oder wenn der Sichtbarkeitseinschränkung-Sicherheitsparameter (Z*) im Vergleich zu einem Sicherheitsgrenzwert unzureichend ist.

14. Fahrzeug, insbesondere Automobil, umfassend eine Fahrzeugsteuereinrichtung (13) gemäß Anspruch 13.

## Revendications

1. Procédé d'évaluation mis en œuvre par ordinateur pour créer un ensemble de données d'apprentissage (10), dans lequel l'ensemble de données d'apprentissage (10) est conçu en particulier pour servir d'entrée et de réalité de terrain pour un procédé d'intelligence artificielle (IA) mis en œuvre par ordinateur pour l'évaluation de la dégradation de la visibilité d'image, et le procédé d'évaluation comprenant les étapes suivantes :
- collecter un ensemble principal (M) d'unités de données d'image (P1, P2, P3, P4) concernant l'environnement (3) d'un véhicule (1, 1'), dans lequel au moins une partie des unités de données d'image (P1, P2, P3, P4) contient des informations d'image qui sont soumises à une dégradation de la visibilité basée sur au moins une influence dégradant la vision (5, 6, 7, 8) ;
- définir de multiples sous-ensembles (S1, S2, S3, S4) d'unités de données d'image (P1, P2, P3, P4), et collecter des résultats de comparaison (C1, C2, C3) pour une comparaison relative des unités de données d'image (P1, P2 ; P3, P4 ; P3, P2) dans un sous-ensemble respectif (S1, S2, S3), dans lequel le résultat de la comparaison (C1, C2, C3) est un paramètre d'entrée fourni par un étiqueteur humain (14), et dans lequel le résultat de la comparaison (C1, C2, C3) est associé au sous-ensemble respectif (S1, S2, S3) et indique un ordre relatif de la visibilité ou de la dégradation de la visibilité parmi les unités de données d'image (P1, P2 ; P3, P4 ; P3, P2) dans le sous-ensemble (S1, S2, S3) ;
- traiter de multiples sous-ensembles (S1, S2, S3) et les résultats de comparaison respectifs (C1, C2, C3), dans lequel un ordre de rang de visibilité absolu (15) est établi pour les unités de données d'image (P1, P2, P3, P4) dans les sous-ensembles traités (S1, S2, S3), dans lequel l'ordre de rang de visibilité absolu fournit une évaluation quantitative de la dégradation de la visibilité sur une échelle unique et indépendamment d'une influence de dégradation de la vision spécifique;
- associer un paramètre de rang (R1, R2, R3, R4) à une unité de données d'image (P1, P2, P3, P4), dans lequel le paramètre de rang (R1, R2, R3, R4) est calculé sur la base de multiples résultats de comparaison (C1, C2, C3) des sous-ensembles traités (S1, S2, S3), et dans lequel le paramètre de rang (R1, R2, R3, R4) définit un rang dans l'ordre de rang de visibilité absolu (15) ;
- délivrer un ensemble de données d'apprentissage (10) comprenant les unités de données d'image (P1, P2, P3, P4) des sous-ensembles traités (S1, S2, S3) et les paramètres de rangs associés (R1, R2, R3, R4).

2. Procédé d'évaluation mis en œuvre par ordinateur selon la revendication 1, dans lequel la collecte des résultats de comparaison (C1, C2, C3) comprend les étapes suivantes, qui sont effectuées plusieurs fois :
- sélectionner un sous-ensemble (S1, S2, S3) et afficher les unités de données d'image incluses (P1, P2, P3, P4) à l'attention de l'étiqueteur humain;
- collecter un paramètre d'entrée à partir de l'étiqueteur humain qui identifie le résultat de la comparaison (C1, C2, C3) pour le sous-ensemble (S1, S2, S3) .

3. Procédé d'évaluation mis en œuvre par ordinateur selon l'une quelconque des revendications 1 et 2, dans lequel la définition de sous-ensembles (S1, S2, S3) et leur traitement, et/ou le calcul des paramètres de rangs (R1, R2, R3, R4) sont effectués de manière itérative, en particulier jusqu'à ce qu'un critère d'évaluation d'ordre de rang prédéfini soit rempli (QM).

4. Procédé d'évaluation mis en œuvre par ordinateur selon l'une quelconque des revendications précédentes, dans lequel la définition de sous-ensembles (S1, S2, S3) comprend de :
- calculer un paramètre de comptage de sous-ensembles, qui indique dans combien de sous-ensembles déjà existants (S1, S2, S3) une unité de données d'image (P1, P2, P3, P4) de l'ensemble principal (M) est incluse;
- si le paramètre de comptage de sous-ensembles d'une unité de données d'image (P1) est inférieur à un seuil de comptage prédéfini, définir un nouveau sous-ensemble (S*) avec l'unité de données d'image sélectionnée (P1) et une autre unité de données d'image (P4) à partir de l'ensemble principal (M) ;
- traiter le nouveau sous-ensemble (S*).

5. Procédé d'évaluation mis en œuvre par ordinateur selon l'une quelconque des revendications précédentes, dans lequel la définition de sous-ensembles (S1, S2, S3) comprend les étapes suivantes, qui sont effectuées au moins une fois :
- sélectionner une première unité de données d'image (P1) ;
- analyser des paramètres de rangs déjà calculés (R1, R2, R3, R4) de plusieurs unités de données d'image (P1, P2, P3, P4) dans l'ensemble principal (M) ;
- identifier au moins une plage cible (T1, T2) dans l'ordre de rang absolu (15) ;
- sélectionner au moins une autre unité de données d'image (P4) dont le paramètre de rang (R4) est situé dans la plage cible (T1, T2) ;
- définir un nouveau sous-ensemble (S*) contenant les unités de données d'image sélectionnées (P1, P4) et traiter ce nouveau sous-ensemble (S*).

6. Procédé d'évaluation mis en œuvre par ordinateur selon l'une quelconque des revendications précédentes, dans lequel le calcul d'un paramètre de rang (R1, R2, R3, R4) est effectué en utilisant un procédé de classement Elo (ELO).

7. Ensemble de données d'apprentissage lisible par ordinateur (10), en particulier stocké sur un support de données physique ou transmis via une interface de communication de données, l'ensemble de données d'apprentissage (10) étant créé par un procédé d'évaluation mis en œuvre par ordinateur selon la revendication 1 et comprenant :
- de multiples unités de données d'image (P1, P2, P3, P4) concernant l'environnement (3) d'un véhicule (1, 1'), dans lequel au moins une partie des unités de données d'image (P1, P2, P3, P4) contient des informations d'image qui sont soumises à une dégradation de la visibilité basée sur au moins une influence dégradant la vision (5, 6, 7, 8) ;
- de multiples paramètres de rangs (R1, R2, R3, R4) ;
dans lequel un paramètre de rang respectif (R1, R2, R3, R4) est associé à au moins une partie des unités de données d'image (P1, P2, P3, P4), et dans lequel chaque paramètre de rang (R1, R2, R3, R4) définit un rang de l'unité de données d'image associée (P1, P2, P3, P4) dans un ordre de rang de visibilité absolu (15), lequel ordre de rang de visibilité absolu (15) fournit une évaluation quantitative de la dégradation de la visibilité sur une échelle unique et indépendamment d'une influence dégradant la vision spécifique.

8. Procédé mis en œuvre par ordinateur pour émuler la dégradation de la visibilité comprenant les étapes suivantes :
- fournir un ensemble de données d'apprentissage (10) en tant qu'entrée d'un procédé d'intelligence artificielle mis en œuvre par ordinateur ou d'un module logiciel d'intelligence artificielle (9), dans lequel
• l'ensemble de données d'apprentissage (10) contient des unités de données d'image (P1, P2, P3, P4) et des paramètres de rangs associés (R1, R2, R3, R4), et dans lequel l'ensemble de données d'apprentissage (10) est créé par une évaluation mise en œuvre par ordinateur selon l'une quelconque des revendications 1 à 6, et dans lequel l'ensemble de données d'apprentissage (10) est conçu selon la revendication 7 ; et dans lequel
• l'ensemble de données d'apprentissage (10) est défini comme la réalité de terrain pour le procédé d'intelligence artificielle ou le module logiciel d'intelligence artificielle (9) ; et dans lequel
• le procédé d'intelligence artificielle ou le module logiciel d'intelligence artificielle (9) analyse les informations d'image contenues dans les unités de données d'image (P1, P2, P3, P4) et établit des règles de filtrage (16), dans lequel les règles de filtrage sont mises en œuvre sous la forme d'un réseau neuronal convolutif et fournissent une attribution à partir des informations d'image au paramètre de rang associé (R1, R2, R3, R4) de l'unité de données d'image respective (P1, P2, P3, P4), de sorte que les règles de filtrage (16) comprenant un réseau neuronal convolutif émulent une évaluation de la dégradation de la visibilité des informations d'image contenues dans les unités de données d'image (P1, P2, P3, P4) conformément à la réalité de terrain ;
- stocker ou transmettre les règles de filtrage (16) OU stocker ou transmettre le module logiciel d'intelligence artificielle (9) OU configurer un module logiciel de classification sur la base des règles de filtrage (16) OU configurer un dispositif de classification informatisé (4) sur la base des règles de filtrage (16).

9. Procédé de classification mis en œuvre par ordinateur comprenant des règles de filtrage (16), qui sont mises en œuvre sous la forme d'un réseau neuronal convolutif et conçues pour attribuer un paramètre de rang estimé (R*) sur la base d'informations d'image contenues dans une unité de données d'image (P*), et dans lequel les règles de filtrage (16) sont créées par un procédé mis en œuvre par ordinateur selon la revendication 8 et comprennent un réseau neuronal convolutif entraîné, et le procédé de classification comprenant les étapes suivantes :
- collecter une nouvelle unité de données d'image (P*) concernant l'environnement d'un véhicule (1, 1'), en particulier une image de conduite réelle, dans lequel les informations d'image qui sont contenues dans la nouvelle unité de données d'image (P*) peuvent être soumises à une dégradation de la visibilité sur la base d'au moins une influence dégradant la vision (5, 6, 7, 8) ;
- appliquer les règles de filtrage (classification) (16) à la nouvelle unité de données d'image (P*);
- fournir le paramètre de rang estimé (R*), qui est attribué à la nouvelle unité de données d'image (P*) par les règles de filtrage (16), dans lequel le paramètre de rang estimé (R*) indique un rang dans un ordre de rang de visibilité absolu (15) entre une valeur minimale (Min) et une valeur maximale (Max), de sorte que le rang estimé (R*) est représentatif d'un degré de dégradation de la visibilité, dans lequel l'ordre de rang de visibilité absolu fournit une évaluation quantitative de la dégradation de la visibilité sur une échelle unique et indépendamment d'une influence dégradant la vision spécifique.

10. Produit logiciel de classification, en particulier stocké sur un support de données physique ou transmis via une interface de communication, le produit logiciel de classification comprenant des instructions pour exécuter un procédé de classification mis en œuvre par ordinateur selon la revendication 9.

11. Dispositif de classification informatisé, comprenant notamment :
- un capteur de vision (2, 2') pour collecter une nouvelle unité de données d'image (P*) concernant l'environnement (3) d'un véhicule (1, 1') et/ou une interface de données de vision (18) pour récupérer une nouvelle unité de données d'image (P*), dans lequel la nouvelle unité de données d'image (P*) est en particulier une image de conduite réelle;
le dispositif de classification (4) étant conçu pour fournir un paramètre de rang estimé (R*) lors de la réception d'une nouvelle unité de données d'image (P*) ; et le dispositif de classification informatisé (4) comprenant une section de classification qui est conçue pour exécuter un procédé de classification mis en œuvre par ordinateur selon la revendication 9.

12. Procédé de test mis en œuvre par ordinateur pour évaluer ou améliorer un ensemble de données d'apprentissage (10) selon la revendication 7, ou procédé de classification mis en œuvre par ordinateur selon la revendication 9, le procédé de test mis en œuvre par ordinateur comprenant les étapes suivantes :
- une nouvelle unité de données d'image (P*) concernant l'environnement d'un véhicule (1, 1'), en particulier une image de conduite réelle, est collectée ou extraite d'un ensemble d'unités de données d'image non traitées au sein de l'ensemble de données d'apprentissage (10) ;
- la nouvelle unité de données d'image (P*) est évaluée par un procédé de classification mis en œuvre par ordinateur selon la revendication 10, dans lequel un paramètre de rang estimé (R*) est associé à la nouvelle unité de données d'image (P*);
- un nouveau sous-ensemble (S*) est créé contenant la nouvelle unité de données d'image (P*) et au moins une autre unité de données d'image traitée (P1, P2, P3, P4) qui est sélectionnée dans l'ensemble de données d'apprentissage (10) ;
- sur la base du paramètre de rang estimé (R*) et d'un paramètre de rang connu (R1, R2, R3, R4), qui est associé à l'autre unité de données d'image (P1, P2, P3, P4), un résultat de comparaison présumé (C') est établi;
- les unités de données d'image (P*, P3) sont affichées au moins une fois pour la validation du résultat de comparaison présumé (C') ;
- un paramètre d'entrée qui identifie un résultat de comparaison de validation (C*) est collecté;
- si le résultat de comparaison présumé (C') est égal au résultat de comparaison de validation (C*), la nouvelle unité de données d'image (P*) et le paramètre de rang estimé associé (R*) sont ajoutés à l'ensemble de données d'apprentissage (10) et/ou un résultat de validation positif est stocké, ET/OU
- si le résultat de comparaison présumé (C') s'écarte du résultat de comparaison de validation (C*), un résultat de validation négatif est stocké.

13. Dispositif de commande de véhicule, en particulier conçu pour une automobile (1'), le dispositif de commande de véhicule (13) comprenant :
- un capteur de vision (2') pour collecter de nouvelles unités de données d'image (P*) concernant l'environnement du véhicule (1') ET/OU une interface de données de vision (18) pour récupérer de nouvelles unités de données d'image (P*), en en particulier dans lequel les nouvelles unités de données d'image (P*) sont des images de conduite réelle; ET
- une section de commande de véhicule (17), qui est conçue (VC) pour exécuter des actions de commande de véhicule sur la base des nouvelles unités de données d'image (P*) qui sont reçues à partir du capteur de vision (2') et/ou de l'interface de données de vision (18), **caractérisé en ce que**
- le dispositif de commande de véhicule (13) comprend un dispositif de classification informatisé (4) selon la revendication 11; et
- le dispositif de commande de véhicule (13) étant conçu de telle sorte qu'un paramètre de sécurité de dégradation de la visibilité (Z*) est calculé sur la base d'au moins un paramètre de rang présumé (R*), qui est fourni par le dispositif de classification informatisé (4) pour au moins une unité de données d'image nouvellement collectée (P*); et dans lequel
- la section de commande de véhicule (17) est conçue pour suspendre ou modifier une action de commande de véhicule, si ou lorsque le paramètre de sécurité de dégradation de la visibilité (Z*) est insuffisant par rapport à un seuil de sécurité.

14. Véhicule, en particulier automobile, comprenant un dispositif de commande de véhicule (13) selon la revendication 13.
